# EUROPÄISCHE PATENTSCHRIFT

(11) **EP 3 956 177 B1**
(45) Veröffentlichungstag und Bekanntmachung des Hinweises auf die Patenterteilung: **13.12.2023**
(21) Anmeldenummer: 20712839.8
(22) Anmeldetag: 02.03.2020
(51) Int. Cl.: B60R 9/06, B60R 9/10

(54) **LASTENTRÄGER**
LOAD CARRIER
SUPPORT DE CHARGE

(30) Priorität: 15.04.2019 DE 202019102152 U; 17.07.2019 DE 202019103944 U
(43) Veröffentlichungstag der Anmeldung: 23.02.2022
(73) Patentinhaber: GA Actuation Systems GmbH, 6277 Zellberg (AT)
(72) Erfinder: Wolfgang, Sailer, 6290 Mayrhofen (AT); Kainzner, Christoph, 6284 Ramsau (AT); Hofer-Haas, Christoph, 6272 Kaltenbach (AT); Geisler, Hansjörg, 6290 Mayrhofen (AT)
(74) Vertreter: ERNICKE Patent- und Rechtsanwälte PartmbB
(86) Internationale Anmeldenummer: PCT/EP2020/055436
(87) Internationale Veröffentlichungsnummer: WO 2020/212005

(56) Entgegenhaltungen:
- EP-A1- 2 033 845
- EP-A2- 1 972 501
- EP-B1- 2 033 845
- DE-A1-102014 016 195

## Beschreibung

Die Erfindung betrifft einen Lastenträger Aus der DE 10 2014 016 195 A1 ist ein Lastenträger bekannt, der zwei am Fahrzeug angeordnete bewegliche Stützarme als Grundelement für die Aufnahme eines Fahrradträgers umfasst. Die Stützarme sind in Fahrtrichtung verschieblich und drehbar mittels Schwenkbügeln und Viergelenken an einem Querträger gelagert. Einer der Stützarme ist zusätzlich durch ein Dreh-Schub-Gelenk oder ein weiteres Viergelenk am Querträger höhenverstellbar. Der Querträger ist mit den Stützarmen hinter einem Stoßfänger offen liegend angeordnet und ist an einer fahrzeugfesten aufrechten und am unteren Ende gebogenen Kulissenführung höhenverstellbar am Fahrzeug gelagert. Der Querträger und die Stützarme führen dadurch eine gekrümmte Fahrbewegung zwischen der Verstaustellung und einer gekippten Gebrauchsstellung aus.

Die EP 1 972 501 A2 lehrt einen Heckträger, der mittels eines einzelnen zentralen Zapfens von unten lösbar in eine fahrzeugfeste Aufnahmehülse gesteckt und um 180° in eine verborgene Nichtgebrauchslage im Fahrzeugheck gedreht und dabei axial in der Aufnahmehülse verschoben werden kann. Die zentrale Aufnahmehülse kann einen Kugelkupplungshals im Austausch gegen den Heckträger aufnehmen.

Die EP 2 033 845 B1 zeigt einen anderen Lastenträger. Er weist eine rahmenartige Tragstruktur auf, die mittels einer Spindelmutter in der Höhe um eine horizontale Achse schwenkverstellt werden kann, wobei die Traganordnung an der Spindelmutter in Axialrichtung des Fahrzeugs längs verschieblich gelagert ist und dadurch für die Einnahme der Betriebsstellung unter dem Fahrzeugboden herausgezogen werden kann. Die Tragstruktur weist an ihrem freien Ende zwei um eine horizontale Achse schwenkbare Stützarme auf, in die Haltezapfen eines Fahrradträgers jeweils stirnseitig eingesteckt werden können.

Die EP 2 657 051 A1 befasst sich mit einer Kupplungsanordnung für einen Heckträger, die zwei jeweils eigenständig schwenkbar und verschieblich gelagerten Kupplungsarme oder die Anordnung zweier Kupplungsarme an einem gemeinsamen Lagerteil für deren simultane Betätigung umfasst. Die Kupplungsarme sind dabei jeweils in offener Lage zwischen dem Karosserieheck und dem hinteren Stoßfänger angeordnet.

Die WO 03/039913 A1 zeigt einen anderen Lastenträger mit ausschwenkbaren Stützarmen ohne Höhenverstellung.

Es ist Aufgabe der vorliegenden Erfindung, einen verbesserten Lastenträger aufzuzeigen.

Die Erfindung löst diese Aufgabe mit den Merkmalen im Hauptanspruch.

Die beanspruchte Ausbildung der Lastenträger mit einem gemeinsamen Basisteil und der dortigen höhenverstellbaren und schwenkbaren Lagerung der Stützarme sowie einem Gehäuse und einer darin angeordneten Hub- und Schwenkeinrichtung und Schwenkarmen hat verschiedene Vorteile.

Die Stützarme können in der eingeschwenkten Nichtgebrauchsstellung eine angehobene Lage einnehmen. Sie können dabei verborgen am Fahrzeug angeordnet sein. Sie können sich insbesondere oberhalb eines benachbarten Fahrzeugrands, z.B. der Unterkante des Fahrzeughecks, befinden. Für die Einnahme der Gebrauchsstellung können die Stützarme abgesenkt und dann ausgeschwenkt werden. Bei der Senkbewegung können die Stützarme in eine Lage unterhalb des besagten Fahrzeugrands abgesenkt und dann unter dem Fahrzeugrand ausgeschwenkt werden. In der ausgeschwenkten Gebrauchsstellung ragen die Stützarme über den besagten Fahrzeugrand hinaus und ermöglichen den Anbau und die lösbare Befestigung eines Trägerteils.

Die Ausbildung des Basisteils mit dem Gehäuse und der darin angeordneten Hub- und Schwenkeinrichtung hat wesentliche Vorteile hinsichtlich der kompakten und platzsparenden Bauform, des geringen Bau- und Steueraufwands sowie einer abgekapselten Unterbringungsmöglichkeit der Stützarme in der Nichtgebrauchsstellung innerhalb des Gehäuses. Die Stützarme können in der ausgeschwenkten Gebrauchsstellung am Gehäuse abgestützt werden.

Der beanspruchte Lastenträger bietet eine hohe Traglast, wobei z.B. mehrere höhergewichtige E-Bikes, Range-Extender-Batterien, Gasflaschen oder andere schwere Lasten aufgenommen werden können. Weitere Vorteile betreffen eine günstige Schwerpunktlage, eine verbesserte Bodenfreiheit, mehr Komfort sowie Ergonomie und eine bessere und sicherere Befestigung der Last. Der Bau- und Steueraufwand wird verringert. Die Kinematik wird verbessert, wobei die Bewegungen und die Bewegungsachsen der Stützarme günstig definiert sind und exakt gesteuert werden können. Die Stützarme können besser zwischen der verborgenen Nichtgebrauchsstellung am Fahrzeug und zwischen der ausgeschwenkten Gebrauchsstellung hin und her bewegt werden.

Hierfür ist eine gerade Form der Stützarme von besonderem Vorteil. Außerdem ist eine evtl. Schräglage des Basisteils günstig. Die Stützarme können in der ausgefahrenen Gebrauchsstellung schräg nach oben ragen und das Gewicht einer am Lastenträger aufgenommenen Ladung abstützen. Die Schräglage wirkt sich auch günstig für die Ergonomie und für die Bodenfreiheit aus, insbesondere bei Wohnmobilen oder dgl. mit einem größeren Hecküberhang. Alternativ ist eine normale Ausrichtung des Basisteils mit horizontal ausgerichteten Stützarmen möglich. Horizontale Stützarme ermöglichen eine besondere Andocktechnik.

Die zwei oder mehr Stützarme sind gemeinsam an dem fahrzeugfesten Basisteil angeordnet. Dabei sind die mehreren Stützarme gemeinsam am Basisteil höhenverstellbar, insbesondere höhenverschieblich, gelagert. Die Stützarme sind um jeweils eine eigene aufrechte Schwenkachse schwenkbar gelagert. Die Stützarme können in einem gegenseitigen seitlichen Abstand, d.h. quer zur Längsrichtung des Fahrzeugs, angeordnet sein. Sie können sich insbesondere an den Seitenrändern bzw. Eckbereichen des Basisteils befinden.

Eine Einbaustelle des Basisteils mit geringem Abstand vor der Heckwand oder dem hinteren Stoßfänger des Fahrzeugs ist besonders günstig. Der oder die Stützarme können dadurch ungehindert an, insbesondere unter, dem Fahrzeugheck in die Gebrauchsstellung bewegt werden. Sie können unter Wahrung einer hohen Stabilität genügend weit nach hinten über das Fahrzeugheck vorragen.

Die bevorzugt verschiebliche, insbesondere lineare, Höhenverstellung der Stützarme kann gemeinsam über das Basisteil erfolgen. Die Stützarme können entsprechend am Basisteil angeordnet werden. Die Schwenkbewegung führen die Stützarme bevorzugt individuell durch. Hierbei kann auch eine Bewegungs- und Schwenkfolge vorgegeben sein. Die Stützarme können jeweils ein eigenes Schwenklager und einen eigenen Schwenkantrieb haben.

Die Stützarme können jeweils um eine aufrechte Achse geschwenkt und entlang der gleichen oder einer parallelen Achse in ihrer Höhenlage gegenüber dem Untergrund verstellt werden. Die aufrechten Achsen sind vorzugsweise gerade. Sie können eine in Einbaustellung vom benachbarten Fahrzeugrand weg gerichtete Neigung haben. Die Stützarme können hierdurch in Gebrauchsstellung die vorgenannte abstützgünstige Schräglage einnehmen. Die aufrechten Achsen können alternativ vertikal ausgerichtet sein.

Die gemeinsame Höhenverstellung am Basisteil kann z.B. über eine dortige Hubbrücke erfolgen. Die Hubbrücke kann mit einem eigenen Antrieb, insbesondere Hubantrieb, in bevorzugt linearer Weise auf und ab bewegt werden. Dank der geraden Form der Stützarme ist nur ein geringer Höhenweg bzw. Hubweg erforderlich. In der unteren Hubstellung können die Stützarme ohne Störkontur unter der Fahrzeugkante bzw. dem Fahrzeugboden in die Gebrauchsstellung ausgeschwenkt werden.

Die Stützarme können am Basisteil in der Vertikalen stets auf gleicher Höhe angeordnet sein. Sie können in der eingeschwenkten Nichtgebrauchsstellung höhengleich in Axialrichtung des Fahrzeugs hintereinander und ggf. aneinander liegen und können auch in der ausgeschwenkten Gebrauchsstellung höhengleich sein. Dies kann auf unterschiedliche Weise erreicht werden. Die aufrechten Schwenkachsen können z.B. in Axialrichtung des Fahrzeugs einen Versatz aufweisen. Andererseits können die Stützarme in der Draufsicht eine konische und zum freien Armende verjüngte Form haben, wobei sie unterschiedlich große Schwenkwinkel um ihre jeweilige aufrechte Schwenkachse ausführen.

Im Gegensatz zum Stand der Technik können die Stützarme des beanspruchten Lastenträgers in der Nichtgebrauchsstellung vor ungünstigen Umwelteinflüssen, insbesondere Spritzwasser, Schnee, Steinschlag und dgl. zuverlässig geschützt werden. Der Bauaufwand sowie Platzbedarf und die Bewegungskinematik sind bei geraden Stützarmen besonders günstig. Platzsparend wirkt sich auch die aufrechte Schwenkachse für die Stützarme sowie die quer zu dieser Schwenkachse ausgerichtete Stützarmform aus. Die bevorzugt lineare Hubbewegung und die Schwenkbewegung der Stützarme kann entlang und um die besagte Achse erfolgen.

Der Lastenträger weist das Basisteil auf, welches an einem Fahrzeug mittels eines Anbaubeschlags fest montiert werden kann. Das fahrzeugfeste Basisteil ist starr und in einer festen Position am Fahrzeug angeordnet. An dem Basisteil und/oder dem Anbaubeschlag kann auch eine Anhängekupplung montiert werden. Dies kann mittels eines am Fahrzeug zu befestigenden Querträgers erfolgen. An diesem kann auch das Basisteil montiert werden.

Der Lastenträger kann außer dem Basisteil ein Trägerteil aufweisen, an dem eine Ladung aufgenommen werden kann. Der Lastenträger kann mit dem Basisteil auch ohne Trägerteil verkauft werden. Das Trägerteil ist seinerseits ein eigenständiges Produkt. Es kann an einem vorhandenen Basisteil montiert und auch gewechselt werden. Ferner können unterschiedliche Trägerteile in beliebiger Zahl vorhanden sein, die mit dem Basisteil lösbar verbunden werden können.

Das lose Trägerteil kann an dem oder den Stützarmen lösbar befestigt, insbesondere angesteckt oder aufgesteckt, werden. Das Trägerteil verbindet und stabiliert dabei die Stützarme in ihrer Gebrauchsstellung.

Das Trägerteil kann ein mit den ausgeschwenkten Stützarmen verbindbares, bevorzugt brückenartiges Tragteil, insbesondere eine sog. Tragbrücke, und ein Lastaufnahmemittel aufweisen. Das Tragteil kann alternativ anders ausgebildet sein. Nachfolgend wird es als Tragbrücke bezeichnet, wobei die Gestaltungsmerkmale auch auf andere Tragteilformen übertragbar sind.

An der Tragbrücke kann ein Hilfsträger für ein weiteres Lastaufnahmemittel montiert werden. Die Tragbrücke und ggf. der Hilfsträger können mit dem Lastaufnahmemittel fest oder lösbar verbunden sein. Ein Befestigungsmittel ermöglicht die jeweilige exakte Positionierung und Fixierung des Lastaufnahmemittels an der Tragbrücke oder am Hilfsträger.

Die Verbindung zwischen den ausgeschwenkten Stützarmen und der Tragbrücke kann in beliebiger Weise erfolgen. Es kann sich um eine Steckverbindung, eine bloße Auflagerung oder um eine andere Verbindung handeln. Die Tragbrücke kann am Basisteil in beliebig geeigneter Weise befestigt werden.

Bei einer vorteilhaften Ausgestaltung der Verbindung kann die Tragbrücke mit einem z.B. manschettenartigen Stützteil auf die Stützarme lose von oben und/oder von vorn aufgesetzt oder aufgesteckt werden und am mittleren Bereich der Stützarme befestigt werden. Dies kann mittels einer Verriegelung erfolgen. Diese kann für eine sichere Fixierung und Kuppelverbindung zwischen der Trägerbrücke und den Stützarmen des Basisteils sorgen. Die Verriegelung kann in drei oder mehr Raumachsen wirken.

Das lose Trägerteil kann durch die hohe Stabilität des Basisteils und der Stützarme für schwere Lasten von z.B. 150 kg und mehr ausgelegt sein und kann diese tragen. Diese ein oder mehreren an einem Trägerteil aufnehmbaren oder aufgenommenen Lasten können unterschiedlich ausgebildet sein, z.B. als Fahrradträger, Behälter oder dgl. Besonders schwere Lasten können durch eine Range-Extender-Batterie für ein Elektrofahrzeug, durch Gasflaschen, z.B. für ein Wohnmobil, oder einen Treibstofftank gebildet werden. Solche Lasten können auch durch andere Gegenstände oder auch Schüttgüter, Fluide oder dgl. gebildet werden.

Die Range-Extender-Batterie, Gasflaschen, Treibstofftank oder dgl. können ein mobiler Medienspeicher, insbesondere Energiespeicher, sein, dessen Medium zur Versorgung eines Verbrauchers im Fahrzeug, insbesondere Kraftfahrzeug oder auch Anhänger, dienen kann. Hierfür kann eine geeignete und bevorzugt lösbare Medienverbindung vorhanden sein. Diese kann z.B. an einem adaptierten Medienanschluss am Basisteil oder an anderer Stelle, z.B. direkt am Fahrzeug, lösbar angekuppelt werden. Über die Medienverbindung kann ein Medium, z.B. elektrische Energie, Gas, flüssiger Treibstoff oder dgl. an den besagten Verbraucher im Fahrzeug übertragen werden. Der Verbraucher kann z.B. ein fahrzeugeigener Energiespeicher, z.B. Batterie bzw. Akku, Treibstofftank oder dgl., oder ein Antrieb, insbesondere Motor, oder eine Heizung, eine Kühlung oder dgl. sein. Andererseits kann die Medienverbindung zur Nachversorgung des mobilen Medienspeichers, z.B. Nachladen der Range-Extender-Batterie an einer stationären Ladestation, dienen.

Das lose Trägerteil mit dem Medienspeicher, insbesondere Energiespeicher, ermöglicht eine schnelle und unkomplizierte Nachversorgung des Fahrzeugs durch Wechsel des Medienspeichers an einer Versorgungsstation. An der Versorgungsstation können eine Mehrzahl von Medienspeichern, insbesondere Energiespeichern, bevorratet werden. Sie können hier nachgeladen oder nachgefüllt werden. Die Versorgungsstation kann beim Fahrzeughalter zuhause, an einer Tankstelle, in einem Autohaus oder dgl. eingerichtet sein.

Das lose Trägerteil kann an schwere Lasten besonders adaptiert sein. Es kann ein angebautes oder anbaubares Tragmittel zur Abstützung im abgenommenen und vom Basisteil und den Stützarmen entfernten Zustand aufweisen. Das Tragmittel kann verstellbar sein. Es kann für den Fahrbetrieb außer Funktion gesetzt werden. Das Tragmittel kann z.B. von ausklappbaren und/oder ggf. höhenverstellbaren Tragfüßen gebildet werden. Diese können z.B. mittels Rollen oder auf andere Weise am Untergrund beweglich sein. Die Höhenverstellung kann unterschiedlich ausgebildet sein und erfolgen, z.B. manuell oder durch einen motorischen oder fluidischen Antrieb. Die Höhenverstellung des Tragmittels ermöglicht eine Anpassung an unterschiedliche und fahrzeugspezifische Stützarmhöhen.

Das Basisteil mit ausgeschwenkten und horizontal gerichteten Stützarmen ermöglicht ein leichtes An- und Abdocken des Trägerteils, z.B. durch eine horizontale Fahr- oder Schiebebewegung. Dies ist besonders für die besagten schweren Lasten von Vorteil. Günstig ist außerdem ein höhenverstellbares Tragmittel, welches das Trägerteil in der geeigneten Andockhöhe gegenüber den ausgeschwenkten Stützarmen halten und ggf. auch zum Aufsetzen auf die Stützarme absenken kann. Auch das Abdocken wird hierdurch erleichtert. Beim An- und Abdocken können die Stützarme und die Stützteile am Trägerteil in und außer Eingriff gebracht werden.

Der beanspruchte Lastenträger mit dem Basisteil und den heb- und senkbaren Stützarmen sowie dem lösbaren Trägerteil ist für die besagten Lasten, insbesondere einen Medienspeicher, bevorzugt eine Range-Extender-Batterie, besonders geeignet.

In einem eigenständigen Erfindungsaspekt kann der Lastenträger für solche schweren Lasten ein Basisteil mit schwenkbaren Stützarmen ohne deren Höhenverstellung umfassen und ein Trägerteil in der genannten Ausbildung aufweisen. Ein loses Trägerteil in der genannten Ausbildung mit einem Medienspeicher, insbesondere einer einer Range-Extender-Batterie, einem Gastank bzw. Gasflaschen, einem Treibstofftank, stellt ebenfalls eine eigenständige Erfindung dar.

Der Lastenträger kann eine Energieversorgung und eine Steckverbindung zur Übertragung von Energie und/oder Signalen zwischen dem Stützarm und dem Trägerteil aufweisen. Die Steckverbindung kann einzeln vorhanden und nur einem einzelnen Stützarm zugeordnet sein. Alternativ sind mehrere Steckverbindungen möglich, die auch an mehreren Stützarmen angeordnet sein können. Die Steckverbindung kann sich im Bereich der mechanischen Verbindungs- oder Befestigungsstelle zwischen dem betreffenden Stützarm und dem Trägerteil befinden.

Mit der Steckverbindung können Energie und bevorzugt auch Signale zu ein oder mehreren Verbrauchern am Trägerteil übertragen werden. Dies können z.B. elektrische Energie und Blinksignale oder Bremssignale oder andere Signale sein. Die Übertragung kann zu rückwärtigen Leuchten am Trägerteil, z.B. Rücklichtern, Bremslichtern, Blinkern, Rückfahrscheinwerfer oder dgl. erfolgen. Am Trägerteil können auch andere Verbraucher, wie z.B. elektrisch oder mit anderer Energie betätigbare Verschlüsse, weitere Leuchten oder dgl., versorgt werden.

Die Steckverbindung hat eigenständige erfinderische Bedeutung. Sie lässt sich auch bei anderen Lastenträgern für ein Fahrzeug, insbesondere ein Kraftfahrzeug, einsetzen. Ein solcher Lastenträger kann einen am Fahrzeug anordenbaren oder angeordneten beweglichen, insbesondere schwenkbaren, Stützarm und ein Trägerteil aufweisen, das lösbar am Stützarm befestigbar oder befestigt ist, wobei der Lastenträger eine Energieversorgung und eine bevorzugt einzelne Steckverbindung zur Übertragung von Energie und/oder Signalen zwischen Stützarm und Trägerteil aufweist.

Die besagte Übertragung von Energie und/oder Signalen zwischen einem beweglichen Stützarm und dem Trägerteil hat Vorteile für die Sicherheit und Zugänglichkeit der Steckverbindung. Außerdem kann der Bedienkomfort beim Befestigen und Lösen des Trägerteils an und von den ein oder mehreren Schwenkarmen verbessert werden. Besondere Vorteile ergeben sich bei ein oder mehreren Stützarmen, die zwischen einer bevorzugt verborgenen Nichtgebrauchsstellung am Fahrzeug und einer ausgefahrenen Gebrauchsstellung beweglich, bevorzugt schwenkbar, sind. Die Verbindung, insbesondere Querverbindung, der Stützarme durch das Trägerteil erfolgt vorzugsweise im Bereich der freien Enden der Stützarme.

In der Gebrauchsstellung kann die Steckverbindung außerhalb, insbesondere hinter, der Fahrzeugaußenkontour angeordnet sein. Sie kann vom Kraftfahrzeug rückseitig distanziert und näher zum Bediener gebracht werden. Sie ist dadurch besser und einfacher zugänglich und sichtbar als bei einer stationär am Fahrzeugheck angeordneten Steckverbindung. Die mechanische Verbindungs- oder Befestigungsstelle zwischen dem betreffenden Stützarm und dem Trägerteil ist ebenfalls besser zugänglich und sichtbar.

Die Stützarme können in der ausgefahrenen, insbesondere ausgeschwenkten, Gebrauchsstellung über den benachbarten Fahrzeugrand, insbesondere das Fahrzeugheck, hinausragen. Dies hat Vorteile für den bequemen und sicheren Anbau des Lastenträgers an dem oder den Stützarmen und auch für das Schließen der Steckverbindung. Zur Abnahme des Trägerteils kann die Steckverbindung auch auf einfache und gut zugängliche Weise wieder gelöst werden.

Das Trägerteil kann ein Stützteil für eine lösbare Befestigung am Stützarm aufweisen. Bei mehreren Stützarmen können mehrere Stützteile vorhanden sein. Besonders günstig ist eine Ausbildung des Stützteils, die eine formschlüssige, bevorzugt steckbare, Befestigung am Stützarm erlaubt. Hierfür kann das Stützteil z.B. eine längliche Armaufnahme aufweisen. Die längliche Armaufnahme kann hülsenartig oder zapfenartig ausgebildet sein, wobei der zugeordnete Stützarm eine entsprechende zapfenartige oder hülsenartige Gegenkontur aufweist.

Die Steckverbindung dient bevorzugt zur Übertragung von elektrischer Energie und elektrischen Signalen. Sie kann aber auch für eine andere Energie- und/oder Signalübertragung, z.B. induktiv, optisch etc., genutzt werden. Die Steckverbindung weist zwei oder mehr lösbar miteinander verbindbare Steckteile auf, wobei ein Steckteil am Stützarm und ein Steckteil am Trägerteil, insbesondere am zugeordneten Stützteil, angeordnet ist.

Für die Anordnung der Steckteile und die Verbindungskinematik gibt es unterschiedliche Möglichkeiten. In einer Variante können die Steckteile am Stützarm und am Stützteil jeweils stirnseitig angeordnet sein. Sie können zudem in Steckrichtung ausgerichtet sein. Dies ist besonders günstig für ein Stützteil mit einer länglichen Armaufnahme. Bei einer anderen Ausführungsform können die Steckteile jeweils seitlich am Stützarm und am Trägerteil, insbesondere am zugeordneten Stützteil, angeordnet sein. Sie können dabei auch einen stirnseitigen Abstand vom jeweiligen Stirnende von Stützarm und Trägerteil bzw. Stützteil haben.

Die Steckverbindung kann in vorteilhafter Weise generell dazu ausgebildet sein, beim Befestigen des Trägerteils am Stützarm durch eine Relativbewegung zwischen Trägerteil, insbesondere Stützteil, und Stützarm geschlossen zu werden. Dies kann eine geführte Relativbewegung sein, die das Zusammentreffen der Steckteile beim Schließen der Steckverbindung erleichtert und sichert. Die Relativbewegung kann eine translatorische und/oder rotatorische Bewegung sein. Bei dem Basisteil mit ausschwenkbaren geraden Stützarmen ist eine translatorische, insbesondere lineare, Steckbewegung besonders günstig. Hierfür ist auch eine stirnseitige Anordnung der Steckteile von Vorteil.

Bei einer Befestigung des losen Trägerteils an den ein oder mehreren Stützarmen kann zugleich die Steckverbindung geschlossen werden. Dies vereinfacht und erleichtert die Montage und Demontage eines Trägerteils und vereinfacht auch die Bedienung. Das Schließen/Öffnen der Steckverbindung beim Befestigen/Lösen des Trägerteils kann automatisch erfolgen. Der Bediener kann dadurch das Schließen der Steckverbindung zur Übertragung von Energie und/oder Signalen nicht vergessen.

Die Steckteile der Steckverbindung können derart ausgebildet und angeordnet sein, dass sie beim Anbauen bzw. Befestigen des Trägerteils am Stützarm durch eine besagte Relativbewegung zwischen Trägerteil, insbesondere Stützteil, und Stützarm miteinander verbunden und in gegenseitigen Eingriff gebracht werden. Der gegenseitige Eingriff kann formschlüssig sein. Ein Steckteil kann z.B. als Stecker mit Stiften und das andere Steckteil als Steckdose mit hohlen Aufnahmen für die Stifte ausgebildet sein. Vorzugsweise sind die Steckteile mehrpolig.

Ein Steckteil kann an einer Aufnahme mit einer Federung federnd ausweichfähig angeordnet sein. Eine solche Anordnung kann für eines der bevorzugt zwei Steckteile der Steckverbindung oder für mehrere, insbesondere beide, Steckteile vorgesehen sein. Die federnde Ausweichfähigkeit hat Vorteile für die Sicherung der Steckverbindung und der Energie- und Signalübertragung während der Fahrt und zur Kompensation durch Trägerteilbewegungen. Die Steckverbindung wird durch die federnde Ausweichfähigkeit entlastet und kann z.B. Schwingbewegungen folgen.

Der Lastenträger kann eine am Stützarm entlang geführte bewegungstolerante, insbesondere schwenktolerante, Leitung aufweisen, die mit der Energieversorgung sowie einem Steckteil der Steckverbindung verbunden ist. Diese Leitung kann bei der Bewegung, insbesondere Schwenkbewegung des betreffenden Stützarms mitgenommen werden. Die Leitung kann eng am Stützarm entlanggeführt werden. Dies sichert und schützt die Leitung. Außerdem werden übermäßige Leitungsdurchhänge und die Gefahr eines Hängenbleibens an Hindernissen während der Fahrt verhindert. In der Nichtgebrauchsstellung kann die Leitung zusammen mit dem betreffenden Stützarm verborgen am Basisteil aufgenommen werden. Am Trägerteil kann ebenfalls eine Leitung vom dortigen Steckteil zu den ein oder mehreren Verbrauchern, insbesondere einem Leuchtenträger, verlegt sein. Durch die definierte Steckverbindung sind enge und sichere Leitungsführungen am Stützarm und am Trägerteil möglich. Die Energieversorgung des Lastenträgers kann mit einer Energiequelle und/oder einem Signalgeber des Kraftfahrzeugs verbindbar oder verbunden sein. Der Lastenträger kann alternativ oder zusätzlich eine eigene Energiequelle, z.B. einen elektrischen Akku und eine Solarzelle, aufweisen. Die Übertragung von Signalen vom Kraftfahrzeug zum Trägerteil kann leitungsgebunden oder drahtlos, z.B. per Funk, Bluetooth, Infrarot etc., erfolgen. Die Übertragungung von Energie und Signalen zum Trägerteil kann gemeinsam über die Energieversorgung und die besagten Leitungen oder getrennt und auf unterschiedlichen Wegen erfolgen.

Die Energieversorgung des Lastenträgers kann eine oder mehrere Zuleitungen zu einem oder mehreren weiteren Verbrauchern aufweisen. Dies kann z.B. ein Steckdosenhalter oder eine Steckdose einer zusätzlichen Anhängerkupplung sein, die am Lastenträger zusätzlich und zentral angeordnet ist, z.B. am Querträger oder am Basisteil.

Zur Übertragung von bevorzugt elektrischer Energie und/oder bevorzugt elektrischen Signalen kann der mit einem Steckteil versehene Stützarm in störsicherer Weise adaptiert sein. Er kann ein Armgehäuse und einen darin angeordneten elektrisch isolierenden Einsatz mit einem stirnseitig montierten Steckteil aufweisen. Das Steckteil ist bevorzugt als Steckdose ausgebildet, was zum Schutz gegen Beschädigung vorteilhaft ist. Das Armgehäuse kann aus einem mechanisch belastbaren und umweltresistenten Material, z.B. Metall, bestehen. Der Stützarm hat bevorzugt eine zapfenartige Form.

Das Stützteil kann eine längliche und hülsenförmige Armaufnahme aufweisen, in der zurückversetzt am rückwärtigen Ende ein Steckteil angeordnet ist. Es befindet sich geschützt und verborgen im inneren Hohlraum der Armaufnahme. Es kann als Stecker ausgebildet sein. Die Armaufnahme umgibt und führt den zapfenartigen Stützarm beim Einstecken. Sie erleichtert und sichert dabei auch den Eingriff der Steckteile und das Schließen der Steckverbindung. Die Armaufnahme kann aus einem elektrisch isolierenden Material ausgebildet sein.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1:: einen Lastenträger mit einer Ladung in perspektivischer Ansicht,
- Figur 2:: eine andere perspektivische Ansicht des Lastenträgers von Figur 1 ohne Ladung,
- Figur 3:: eine Seitenansicht des Lastenträgers von Figur 1 und 2,
- Figur 4:: eine perspektivische Ansicht eines Basisteils und von einzelnen Komponenten eines Trägerteils des Lastenträgers,
- Figur 5:: eine andere perspektivische Ansicht der Anordnung von Figur 5,
- Figur 6:: eine abgebrochene und vergrößerte Detailansicht vom Ende eines Stützarms,
- Figur 7:: eine perspektivische Ansicht des Basisteils mit ausgeschwenkten Stützarmen,
- Figur 8:: eine perspektivische und aufgebrochene Ansicht der Anordnung von Figur 7 und
- Figur 9:: eine perspektivische Ansicht des Basisteils mit eingeschwenkten Stützarmen,
- Figur 10:: eine Variante des Lastenträgers mit verschiedenen Ladungen in perspektivischer Ansicht,
- Figur 11:: eine transparente Ansicht des Lastenträgers von Figur 10,
- Figur 12 und 13:: eine Seitenansicht und eine Unteransicht des Lastenträgers von Figur 10,
- Figur 14 und 15:: eine Abwandlung des Lastenträgers von Figur 10 mit anderen Ladungen in verschiedenen Ansichten,
- Figur 16:: eine perspektivische Ansicht eines Basisteils und von einzelnen Komponenten eines Trägerteils des Lastenträgers von Figur 10,
- Figur 17:: eine Draufsicht auf die Anordnung von Figur 16,
- Figur 18:: eine vergrößerte Ansicht des Details XVIII von Figur 17,
- Figur 19 bis 22:: eine Variante des Lastenträgers von Figur 1 mit und ohne eine Ladung in verschiedenen Ansichten,
- Figur 23 bis 25:: eine weitere Variante des Lastenträgers und seines Basisteils in verschiedenen Betriebsstellungen und zum Teil geschnittenen Ansichten,
- Figur 26 und 27:: eine ausschnittsweise perspektivische und eine geschnittene Detailansichten zu Figur 25,
- Figur 28:: eine perspektivische Ansicht eines Basisteils eines Lastenträgers mit einer Steckverbindung und mit ausgeschwenkten Stützarmen und von einzelnen Komponenten eines Trägerteils des Lastenträgers,
- Figur 29:: eine perspektivische und aufgebrochene Ansicht des Basisteils von Figur 28,
- Figur 30:: eine perspektivische Ansicht des Trägerteils mit einer Steckverbindung,
- Figur 31:: einen Stützarm und ein Stützteil am Trägerteil von Figur 30 mit einer elektrischen Steckverbindung in perspektivischer Ansicht,
- Figur 32:: eine rückwärtige Ansicht des Stützteils gemäß Pfeil XXXII von Figur 31,
- Figur 33:: eine teilweise aufgebrochene perspektivische Ansicht der Anordnung von Figur 31,
- Figur 34 und 35:: verschiedene perspektivische Ansichten von Steckteilen der Steckverbindung von Figur 31,
- Figur 36:: eine Explosionsdarstellung der Anordnung von Figur 31,
- Figur 37 und 38:: eine Variante des Lastenträgers mit einem Kugelhals und Abwandlungen der Steckverbindung und
- Figur 39 und 40:: eine weitere Variante des Lastenträgers mit einem Trägerteil und einem Medienspeicher.

Die Erfindung betrifft einen Lastenträger (1). Er dient zur Aufnahme einer Last oder Ladung (28,28'). Der Lastenträger (1) ist für ein Fahrzeug (25), insbesondere ein Straßenfahrzeug, vorgesehen und kann hier angebaut werden. Das Fahrzeug (25) kann z.B. als Kraftfahrzeug, insbesondere PKW, Kastenwagen oder Wohnmobil, oder als Anhänger, ausgebildet sein. Das Fahrzeug (25) hat eine Längsachse oder Fahrtrichtung (34).

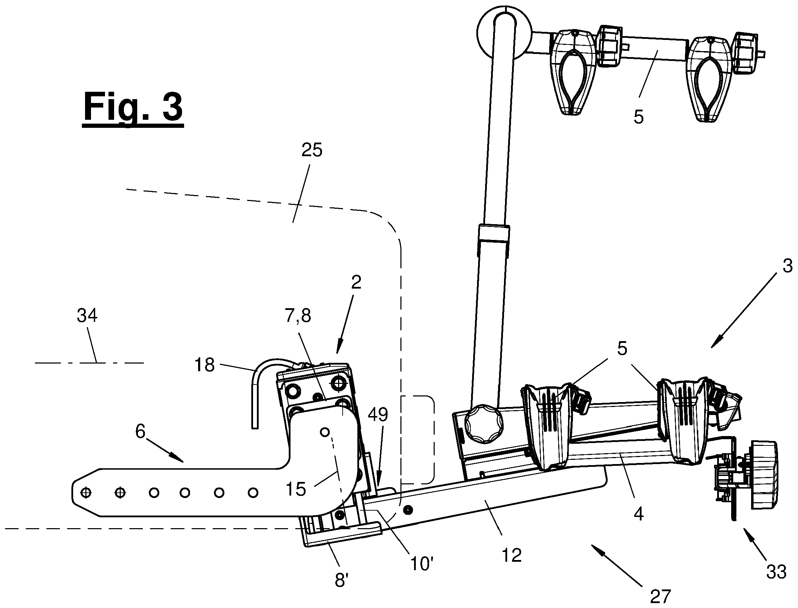

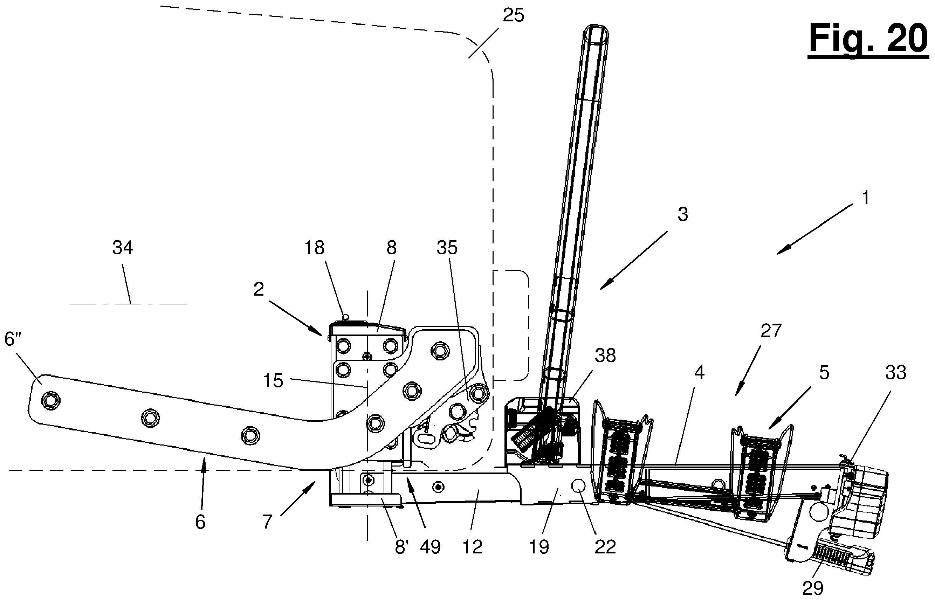

Der Lastenträger (1) kann insbesondere ein Heckträger sein. In Figur 3 und 20 ist die Anbausituation am Heck eines Fahrzeugs (25) gestrichelt angedeutet.

Der Lastenträger (1) weist zumindest ein Basisteil (2) auf, welches am Fahrzeug (25) angeordnet und befestigt werden kann. Das Basisteil (2) ist in Einbaustellung quer zur Längsachse (34) ausgerichtet und befindet sich am Heckbereich des Fahrzeugs (25). Es ist z.B. an oder vor der Heckwand und bevorzugt weitgehend verborgen angeordnet. Der Lastenträger (1) kann einen Anbaubeschlag (6) für eine bevorzugt stationäre Montage des Basisteils (2) am Fahrzeug (25) aufweisen.

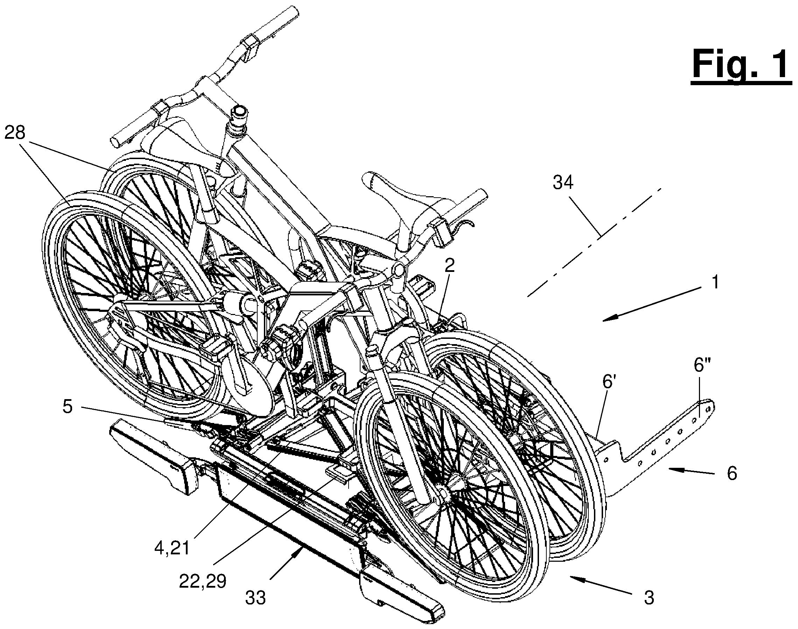

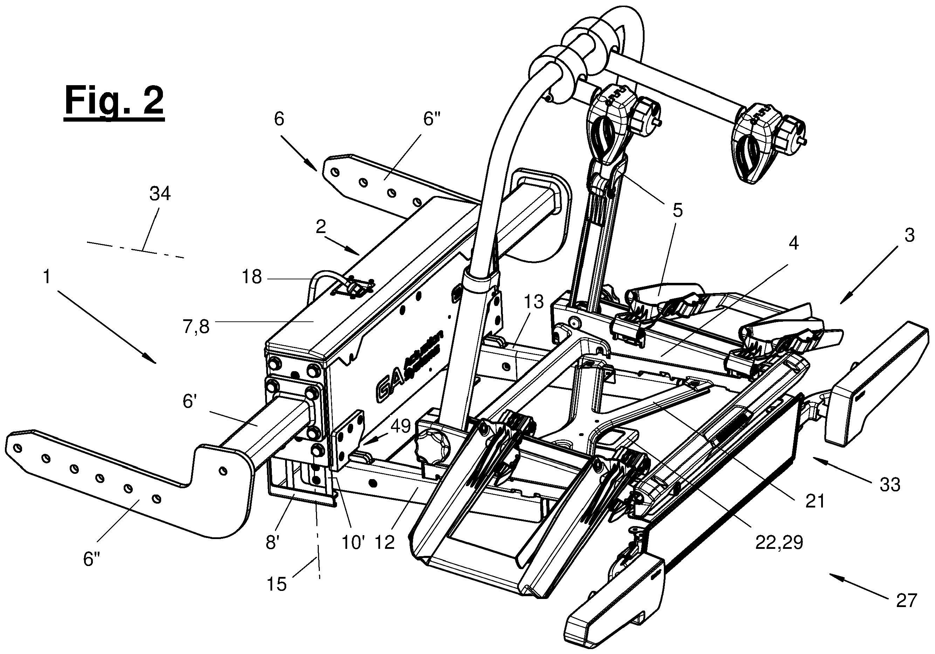

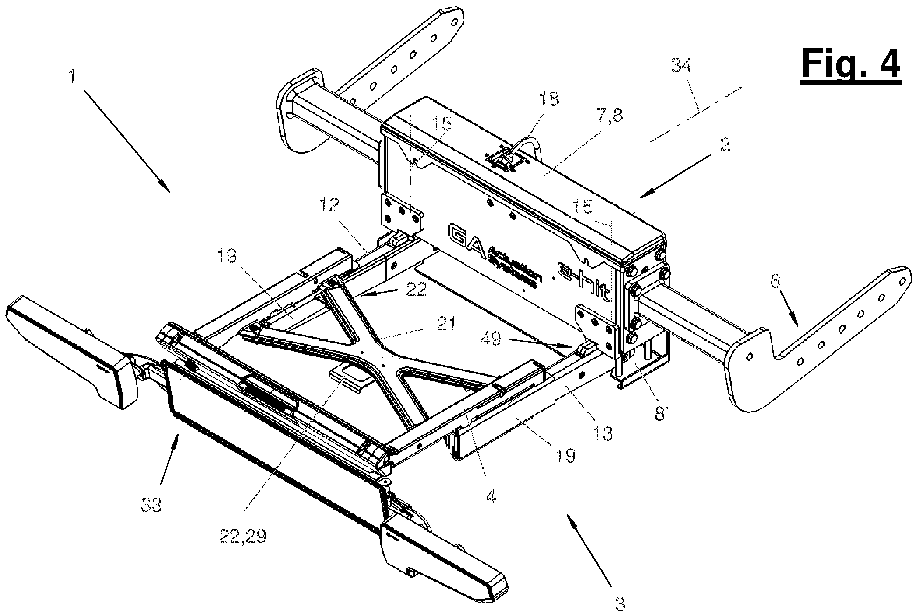

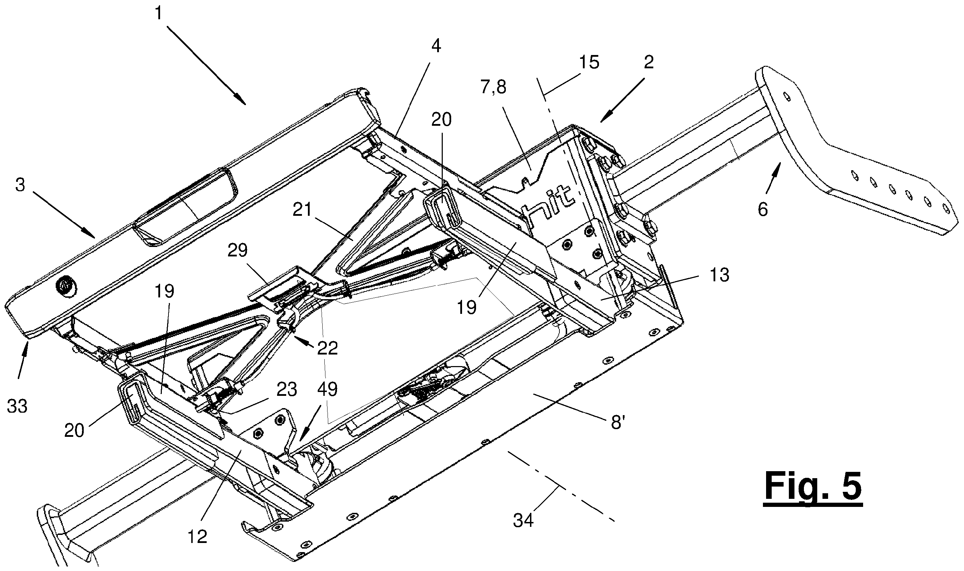

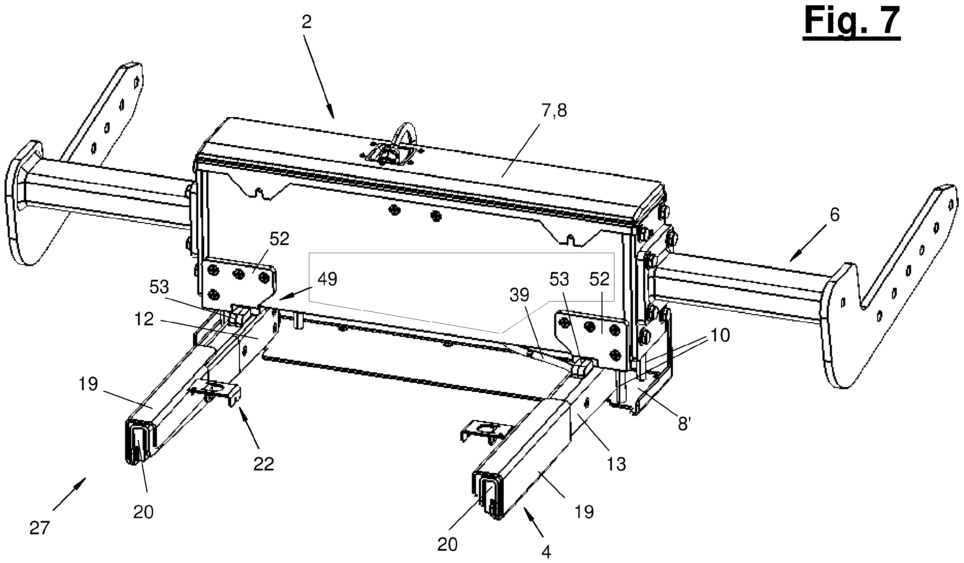

Der Anbaubeschlag (6) kann z.B. in den Varianten von Figur 1 bis 9 quer zur Fahrzeuglängsachse (34) gerichtete stummelartige Tragarme (6') aufweisen. Diese können am Basisteil (2) beidseits befestigt sein. Sie können an den freien Enden jeweils einen Anbauflansch (6") oder dgl. zur Befestigung an einem Chassis oder an der Karosserie des Fahrzeugs (25) aufweisen.

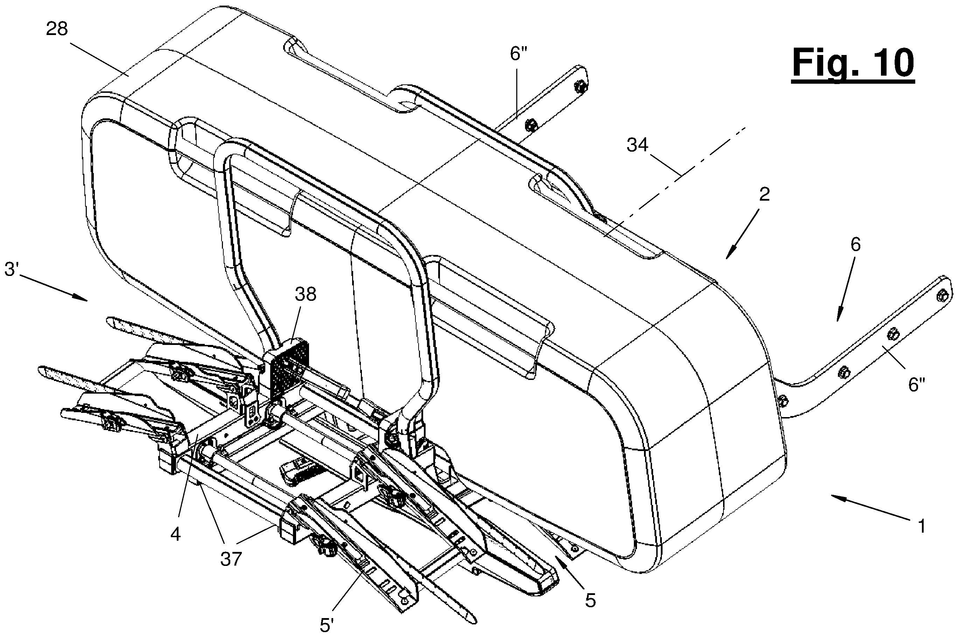

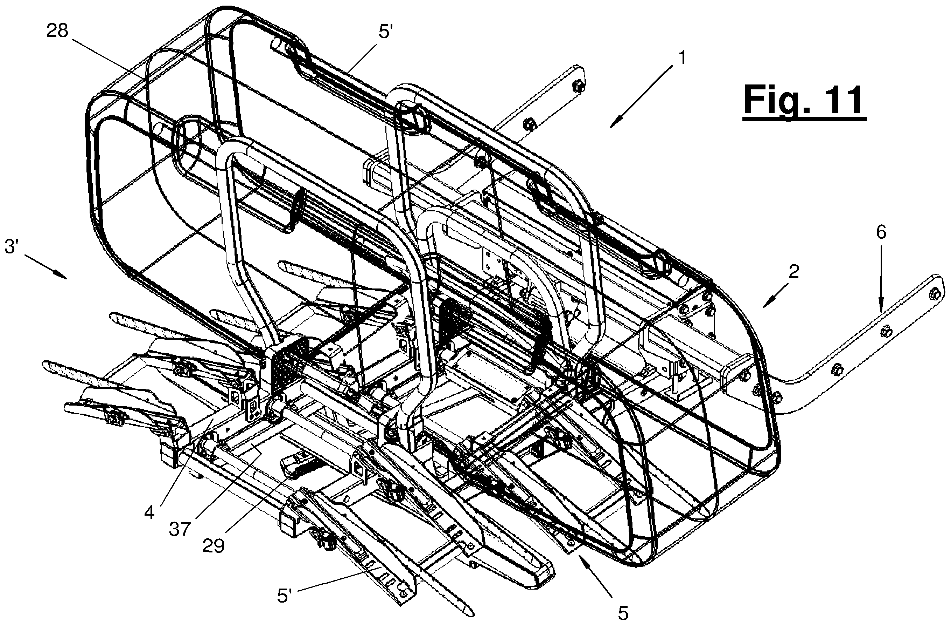

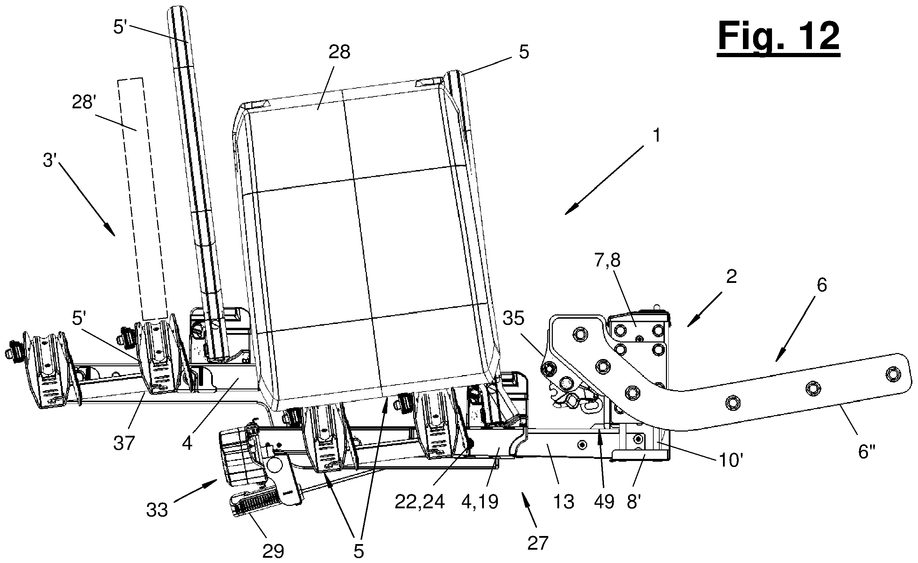

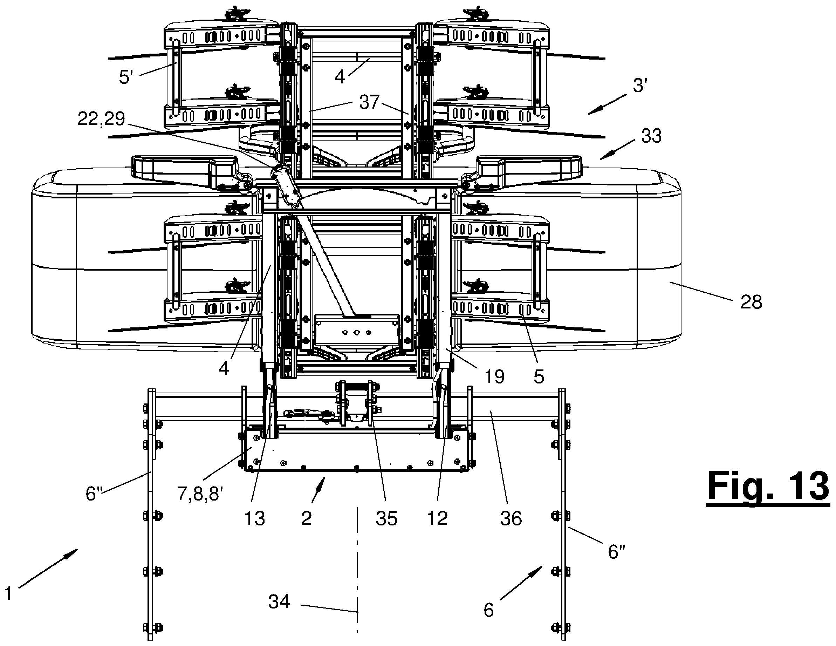

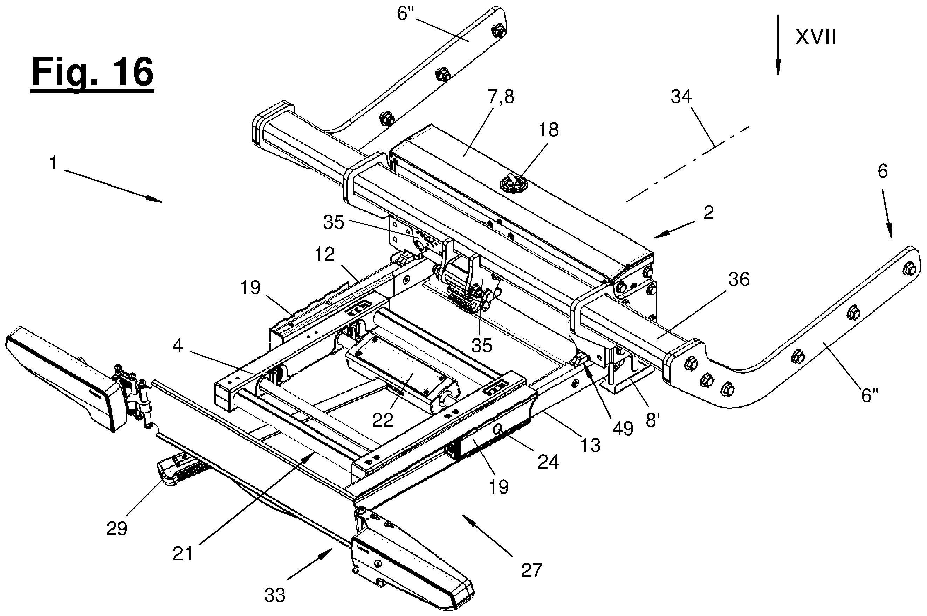

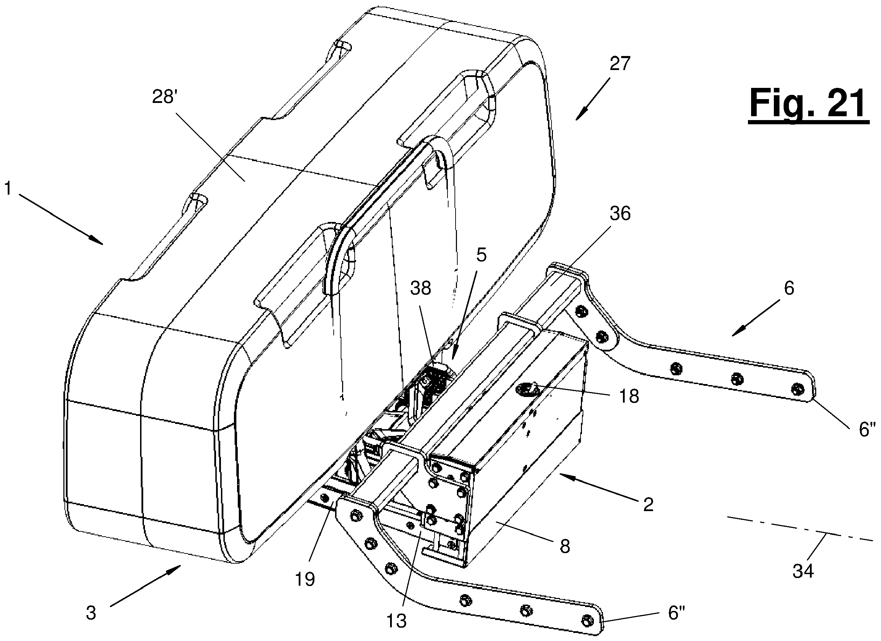

In den Ausführungsformen von Figur 10 bis 22 weist der Anbaubeschlag (6) einen über die Fahrzeugbreite durchgehenden Querträger (36) auf, an dem das Basisteil (2) in geeigneter Weise, z.B. hängend, montiert werden kann. An den Enden des Querträgers (36) können Anbauflansche (6") oder dgl. zur fahrzeugseitigen Befestigung angeordnet sein.

Bedarfsweise kann außerdem eine Anhängerkupplung (35) sowie ein Steckdosenhalter (35') oder eine Steckdose zentral am Querträger (36) montiert werden. Die Anhängerkupplung (35) kann abnehmbar oder beweglich, insbesondere schwenkbar, ausgebildet sein. Am Querträger (36) kann das Aufnahmeteil einer abnehmbaren, insbesondere steckbaren, Anhängerkupplung (35) befestigt sein. Die abnehmbare oder bewegliche Anhängerkupplung (35) stört nicht die Handhabung und den Lastenbetrieb des Lastenträgers (1).

Der Anbaubeschlag (6), insbesondere der Querträger (36), kann alternativ am Fahrzeug (25) bereits vorhanden sein.

Der Lastenträger (1) kann außerdem ein Trägerteil (3,3') aufweisen. Dieses kann mit dem Basisteil (2) lösbar verbunden werden. Es kann abgenommen und bedarfsweise auch gewechselt werden. Das Trägerteil (3,3') kann unterschiedlich ausgebildet sein. Es dient der Aufnahme einer Last oder Ladung (28,28'). Das Trägerteil (3,3') weist ein oder mehrere Lastaufnahmemittel (5,5') auf. Diese können an eine Last oder Ladung (28,28') adaptiert sein.

Das in den Figuren 1 bis 9 und 19 bis 22 gezeigte Trägerteil (3) ist für die Aufnahme einer einzelnen Last (28), z.B. ein oder mehreren Fahrrädern, ausgebildet. Eine andere Last (28') kann z.B. ein offener oder geschlossener Behälter bzw. eine Box sein.

Das in Figur 10 bis 18 gezeigte Trägerteil (3') kann mehrere, z.B. zwei, gleiche oder unterschiedliche Lasten (28,28') aufnehmen. Dies können z.B. Fahrräder und ein offener oder geschlossener Behälter bzw. eine Box sein.

Die Lasten (28,28') können in Fahrtrichtung (34) hintereinander angeordnet sein. Darüber hinaus sind weitere Ausbildungsvarianten möglich.

Der Lastenträger (1) kann als Ensemble aus einem Basisteil (2) und ein oder mehreren gleichen oder unterschiedlichen Trägerteilen (3,3') ausgebildet sein. Das jeweilige Trägerteil (3,3') ist an das Basisteil (2) adaptiert. Das Trägerteil (3,3') kann ein eigenständiges Produkt und ein eigener Erfindungsgegenstand sein. Es kann getrennt vom Basisträger (2) hergestellt und verkauft werden.

Das Trägerteil (3) kann ein z.B. brückenartiges Tragteil (4) und ein Lastaufnahmemittel (5) aufweisen. Das Tragteil (4) wird nachfolgend als Tragbrücke beschrieben. Es kann alternativ anders ausgebildet sein.

Das Trägerteil (3') für mehrere Lasten (28,28') kann ebenfalls die Tragbrücke (4) mit dem Lastaufnahmemittel (5) und zudem einen rahmenartigen Hilfsträger (37) mit einem weiteren Lastaufnahmemittel (5') für die zusätzliche Last (28') aufweisen. Der Hilfsträger (37) kann am Trägerteil (3'), insbesondere an der Tragbrücke (4), fest oder lösbar montiert sein. Der Hilfsträger (37) und sein Lastaufnahmemittel (5') vergrößern die Ladekapazität des Lastenträger (1) und können bedarfsweise montiert oder demontiert werden.

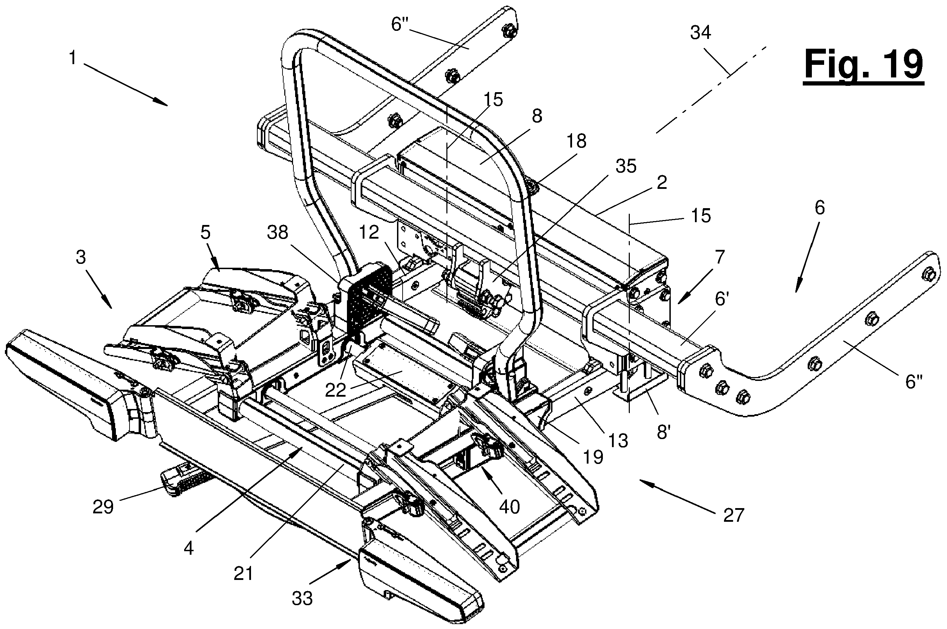

Ein Lastaufnahmemittel (5) kann z.B. als einzelne oder mehrfache Fahrradaufnahme ausgebildet sein. Ein anderes Lastaufnahmemittel (5) kann z.B. als Behälteraufnahme ausgebildet sein. Die Lastaufnahmemittel (5,5') können einen hochstehenden Bügel aufweisen, der zur Lastenbefestigung, z.B. für Fahrradrahmen, und ggf. als Griff zur leichteren Handhabung dienen kann. Dies ist auch in Figur 19 bis 21 dargestellt.

Das Tragteil, insbesondere die Tragbrücke (4), und das Lastaufnahmemittel (5) können jeweils einteilig oder mehrteilig sein. Die Tragbrücke (4) und das Lastaufnahmemittel (5) können separat ausgebildet und fest oder lösbar miteinander verbunden sein. Sie können auch als integrale Baueinheit ausgebildet sein. Der Hilfsträger (37) und sein Lastaufnahmemittel (5') können entsprechend ausgebildet sein.

Ein lösbares Lastaufnahmemittel (5,5') kann jeweils mit einem Befestigungsmittel (38) an der Tragbrücke (4) oder am Hilfsträger (37) positioniert und bevorzugt formschlüssig gespannt und fixiert werden. Das manuell bedienbare Befestigungsmittel (38) kann mit einem schwenkbaren Bügel oder Griff zusammenwirken, der aus der gezeigte aufrechten Lage in eine Liegestellung umgeklappt werden kann. Durch die Drehung können Spannklauen oder dgl. zum Befestigen und Lösen betätigt werden. Die abgeklappte Stellung ermöglicht außerdem ein platzsparendes Verstauen.

Der Lastenträger (1) weist bevorzugt mehrere, insbesondere zwei, bewegliche Stützarme (12,13) auf, die für die Aufnahme und lösbare Verbindung, insbesondere Befestigung, eines Trägerteils (3,3') am Basisteil (2) vorgesehen sind. Das Trägerteil (3,3') wird in Anbaustellung von den Stützarmen (12,13) getragen. Es kann dabei auf den Stützarmen (12,13) lose oder geführt aufliegen und kann in beliebiger Weise am Basisteil (2) lösbar befestigt werden. Das Trägerteil (3,3') kann an den Stützarmen (12,13) oder an anderer Stelle des Basisteils (2) lösbar befestigt werden.

Die Stützarme (12,13) sind an dem Basisteil (2) gemeinsam angeordnet. Sie können ein Bestandteil des Basisteils (2) sein. Die Stützarme (12,13) sind am Basisteil (2) höhenverstellbar gelagert und sind außerdem um jeweils eine eigene aufrechte Achse (15) schwenkbar gelagert. Die höhenverstellbare Anordnung kann höhenverschieblich sein. Insbesondere können die Stützarme (12,13) gemeinsam in der Höhe verstellt, insbesondere verschoben werden. Sie können entsprechend am Basisteil (2) angeordnet werden. In einer bevorzugten Ausführungsform sind die Stützarme (12,13) entlang der geraden aufrechten Achse (15) höhenverstellbar, vorzugsweise linear höhenverschieblich, angeordnet.

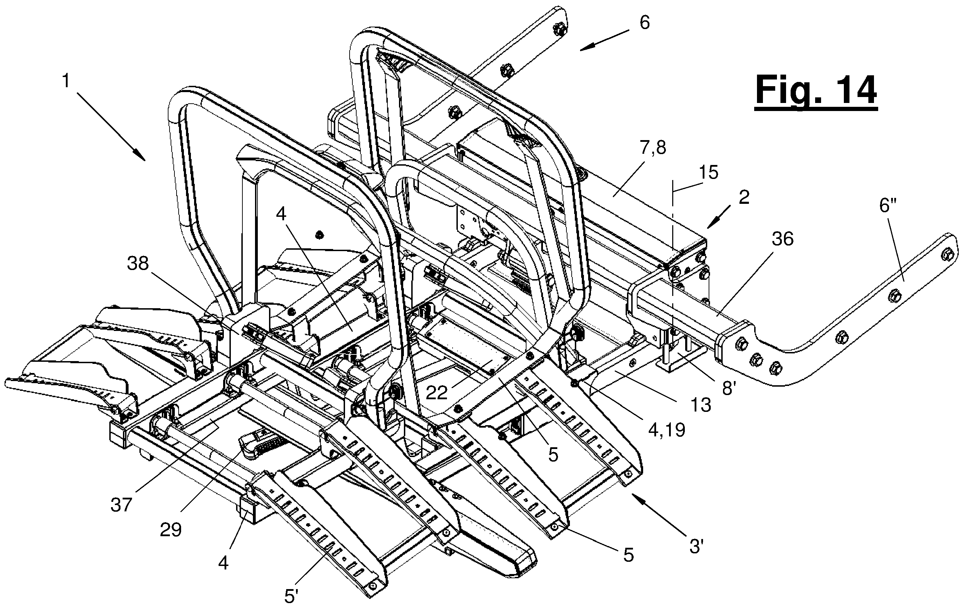

Wie Figur 3 verdeutlicht, kann die aufrechte Achse (15) in Einbaustellung am Fahrzeug (25) schräg angeordnet sein. Sie kann dabei vom benachbarten Fahrzeugrand, z.B. von dem in Figur 3 gezeigten Fahrzeugheck, weg und in Richtung zur Fahrzeugfront geneigt sein. Alternativ ist eine in Figur 14, 15 und 20 gezeigte vertikale Achsausrichtung möglich.

Die Stützarme (12,13) sind quer zur aufrechten Achse (15) ausgerichtet. Die Stützarme (12,13) können parallele aufrechte Achsen (15) aufweisen. Die Stützarme (12,13) und die aufrechten Achsen (15) sind mit seitlichem Abstand am Basisteil (2) angeordnet. Sie befinden sich jeweils an einem seitlichen Randbereich bzw. Eckbereich des Basisteils (2). In der gezeigten Heckanordnung am Fahrzeug (25) erstreckt sich das Basisteil (2) quer zur Fahrzeuglängsachse (34) und entlang des Fahrzeughecks. Die aufrechten Achsen (15) und die Stützarme (12,13) sind in dieser Richtung voneinander distanziert. Die Stützarme (12,13) können stets auf gleicher Höhe in der Vertikalen angeordnet sein.

Die aufrechten Achsen (15) können dabei in Längsrichtung (34) des Fahrzeugs (25) gesehen auf gleicher Höhe angeordnet sein oder einen nicht dargestellten Axialversatz aufweisen. Bei einem Axialversatz können die höhengleichen Stützarme (12,13) in der eingeschwenkten Stellung in Längsrichtung (34) hintereinander und aneinander liegen. Beim Ein- und Ausschwenken der Stützarme (12,13) um ihre jeweilige aufrechte Achse (15) kann eine vorgegebene Bewegungs- und Schwenkfolge bestehen.

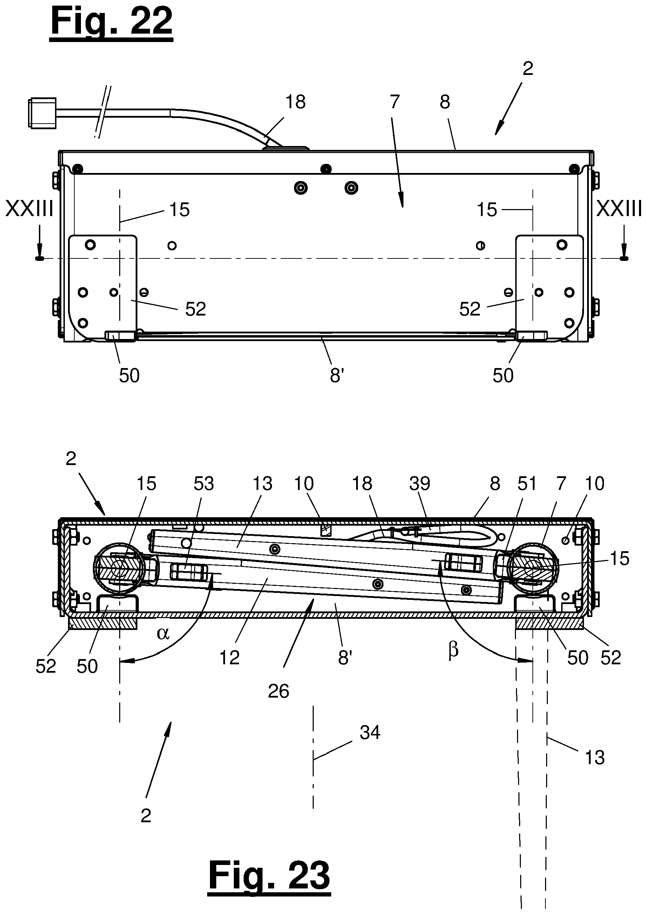

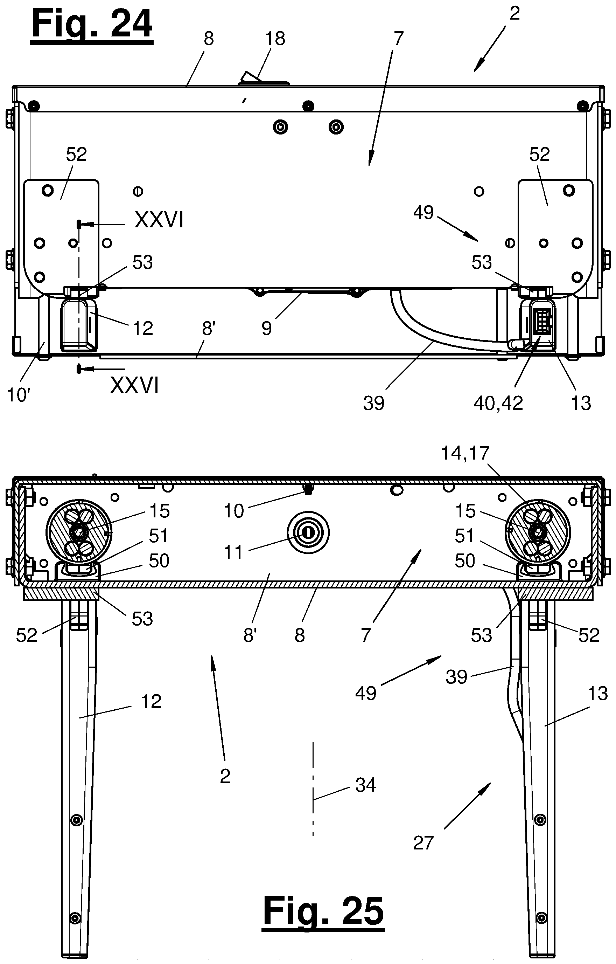

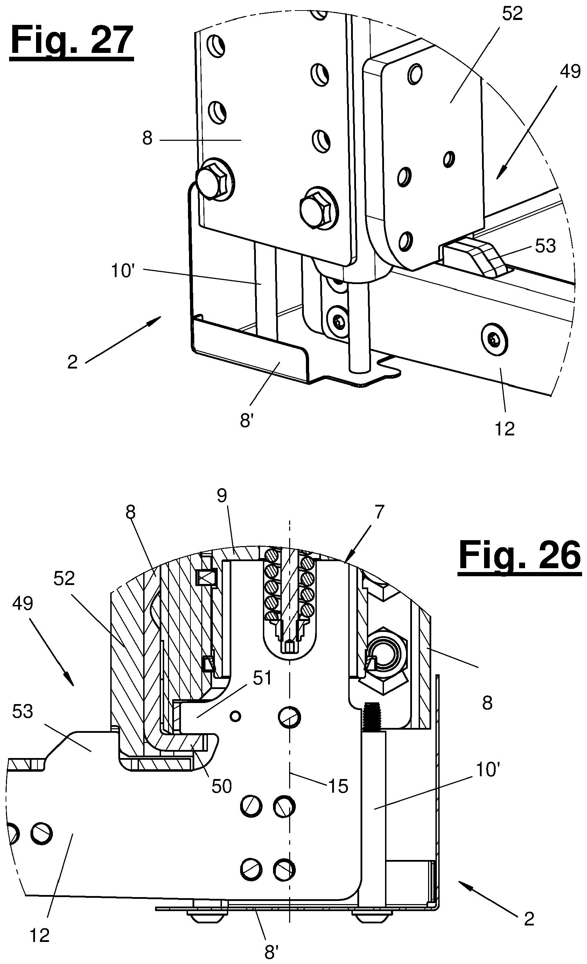

Die Figuren 22 bis 25 zeigen eine Variante der Stützarmausbildung, die ebenfalls ein Aneinanderliegen der Stützarme (12,13) in der eingeschwenkten Stellung ermöglicht. Figur 22 zeigt eine Frontansicht des Basisteils (2) und Figur 23 einen Schnitt in Draufsicht gemäß Schnittlinie XXIII - XXIII von Figur 22. In Figur 24 sind eine Frontansicht und in Figur 25 eine zugehörige geschnittene Draufsicht dargestellt. Figur 26 zeigt einen abgebrochenen Schnitt entlang Schnittlinie XXVI - XXVI von Figur 24. Figur 27 ist eine Detaildarstellung zu Figur 24, die ausschnittsweise eine Gehäuseecke und einen ausgeschwenkten sowie abgestützten Stützarm (13) zeigt.

Die aufrechten Achsen (15) sind in Längsrichtung (34) des Fahrzeugs (25) gesehen auf gleicher Höhe angeordnet. Die Stützarme (12,13) haben in der Draufsicht eine konische und zum freien Armende verjüngte Form, wobei sie unterschiedlich große Schwenkwinkel (α,β) um ihre jeweilige aufrechte Achse (15) bzw. Schwenkachse ausführen. Der eine in Einschwenkstellung hinten liegende Stützarm (12) schwenkt z.B. um einen Winkel (α) von weniger als 90°, z.B. ca. 87°. Der andere in Einschwenkstellung vorn liegende Stützarm (13) schwenkt z.B. um einen Winkel (β) von mehr als 90°, z.B. ca. 95°.

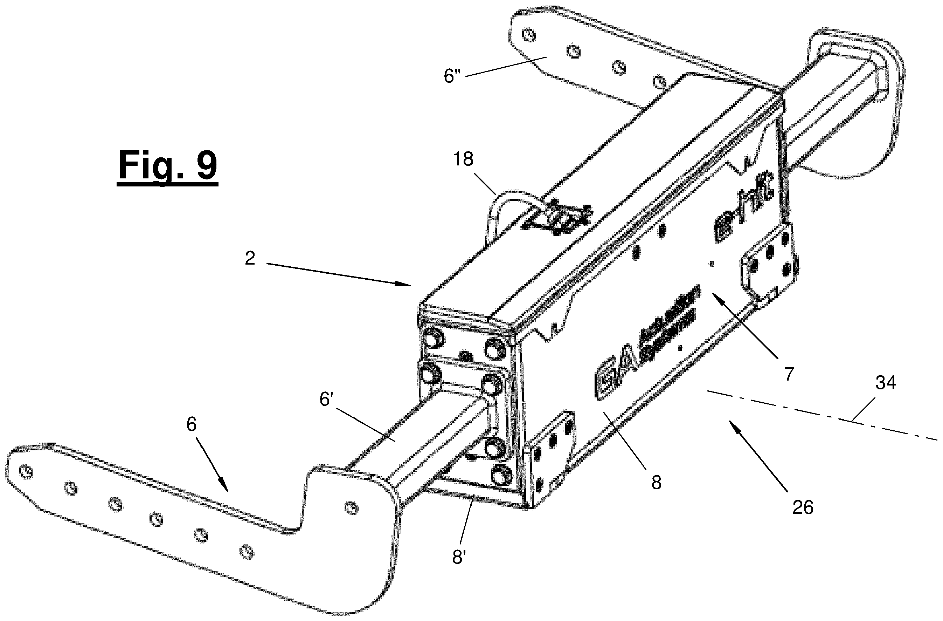

Die Stützarme (12) sind zwischen einer in den Figuren 1 bis 8 sowie 24 und 25 gezeigten Gebrauchsstellung (27) und einer in Figur 9, 22 und 23 dargestellten Nichtgebrauchsstellung (26) beweglich.

Bei einer Bewegung aus der Nichtgebrauchsstellung (26) in die Gebrauchsstellung (27) werden die Stützarme (12,13) entlang der aufrechten Achsen (15) abgesenkt und anschließend um ihre jeweilige aufrechte Achse (15) ausgeschwenkt. Für die Einnahme der Nichtgebrauchsstellung (26) ergibt sich eine umgekehrte Bewegungsreihenfolge.

In der Nichtgebrauchsstellung (26) sind die Stützarme (12,13) eingeschwenkt und verborgen an der Unterseite des Fahrzeugs (25) angeordnet. In der Gebrauchsstellung (27) sind die Schlitzarme (12,13) ausgeschwenkt und ragen über den benachbarten Fahrzeugrand vor. Dies ist z.B. in Figur 3 und 20 das Fahrzeugheck.

Die Schwenkbewegung in die Gebrauchsstellung (27) erfolgt gemäß Figur 3 und 20 unterhalb des Fahrzeugrands, insbesondere unterhalb eines hinteren Stoßfängers des Fahrzeugs (25). In der Nichtgebrauchsstellung (26) sind die eingeschwenkten Stützarme (12,13) angehoben und können sich verborgen und die Bodenfreiheit vergrößernd oberhalb des Fahrzeugrands befinden. Der Hebe- und Senkweg entlang der aufrechten Achsen (15) ist entsprechend bemessen.

Die Stützarme (12,13) können außerdem in einer ausgeschwenkten Betriebsstellung (27) horizontal oder schräg nach oben gerichtet sein. Figur 3, 12, 15 und 20 verdeutlichen in der Seitenansicht diese Ausrichtungen. Die aufrechte Achse (15) hat bei schräger Stützarmausrichtung eine Schräglage.

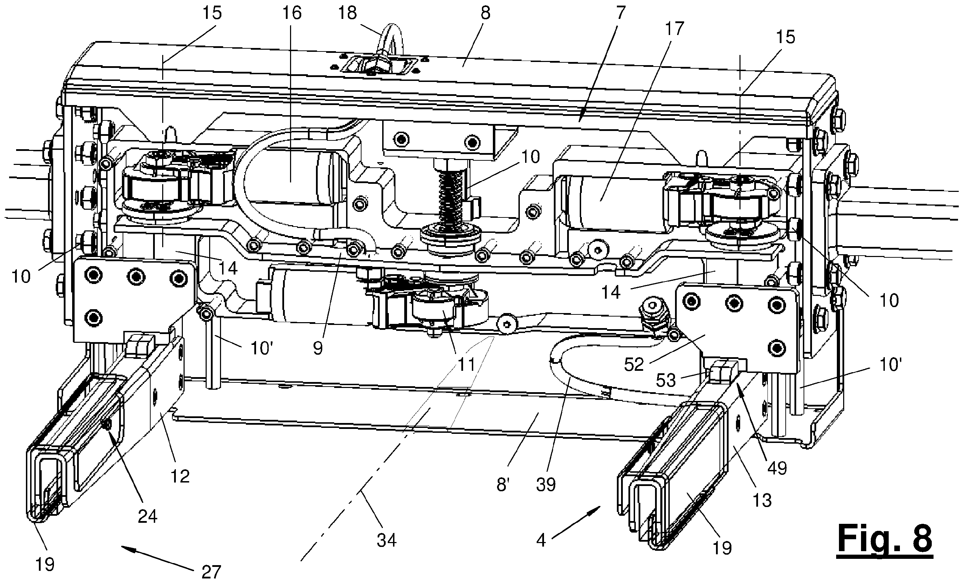

Die Stützarme (12,13) haben in der bevorzugten Ausführungsform eine gerade Ausrichtung. Ihre Form kann belastungsgünstig ausgebildet sein. Die Stützarme (12,13) können insbesondere gemäß Figur 8 in ihrer Längserstreckung und in Draufsicht eine konische Form haben, die sich zum freien Armende hin verjüngt. Die Stützarme (12,13) können eine beliebig geeignete Querschnittsform haben. Sie können z.B. als nach unten offene U-Profile oder als umfangseitig geschlossene Kastenprofile ausgebildet sein.

Das Basisteil (2) weist eine Hub- und Schwenkeinrichtung (7) für die Stützarme (12,13) auf. Mit dieser können die Stützarme (12,13) die vorbeschriebene Kinematik ausführen.

Das Basisteil (2) weist ein verschließbares Gehäuse (8) auf. In dem Gehäuse (8) ist die Hub- und Schwenkeinrichtung (7) angeordnet. Außerdem können im Gehäuse (8) die Stützarme (12,13) in der Nichtgebrauchsstellung (26) verborgen aufgenommen werden. In der Gebrauchsstellung (27) ragen die Stützarme (12,13) aus dem dann geöffneten Gehäuse (8) nach außen.

Die Hub- und Schwenkeinrichtung (7) beinhaltet mehrere motorische Antriebe (11,16,17) für die Höhen- und Schwenkverstellung der Stützarme (12,13). Die motorischen Antriebe (11,16,17) können z.B. Elektromotoren, insbesondere Getriebemotoren, umfassen.

Ferner ist am Gehäuse (8) eine Energieversorgung (18) angeordnet, die mit einer geeigneten Energiequelle, z.B. mit der Stromversorgung des Fahrzeugs (25), insbesondere dessen Batterie, verbunden ist. Die Figuren 1 bis 9 und 19 bis 22 zeigen diese Anordnung. Der Lastenträger (1) beinhaltet ferner eine Steckverbindung (40) zur Übertragung von Energie und/oder Signalen zwischen dem Stützarm (12,13) und Trägerteil (3,3').

Die Hub- und Schwenkeinrichtung (7) weist gemäß Figur 8 eine höhenverstellbare und angetriebene Hubbrücke (9) auf, an der die Stützarme (12,13) gemeinsam angeordnet und mittels Schwenklagern (14) schwenkbar gelagert sind. An der Hubbrücke (9) sind auch die Antriebe (16,17), insbesondere Schwenkantriebe, der Stützarme (12,13) angeordnet. Die Hubbrücke (9) erstreckt sich liegend, insbesondere horizontal, innerhalb des Gehäuses (8). Sie wird von einem motorischen Hubantrieb (11) gehoben und gesenkt. Sie ist dabei mittels einer Führung (10) entlang der vorgenannten Achsen (15) parallel verfahrbar gelagert. Die Führung (10) kann von Rollenführungen an den seitlichen Gehäusewänden gebildet werden. Sie kann alternativ oder zusätzlich z.B. von einer aufrechten und parallel zu den Achsen (15) verlaufenden Schienenführung an einer Gehäusewand gebildet werden, z.B. an der in Fahrtrichtung (34) vorn liegenden Frontwand. Figur 8, 23 und 25 zeigt diese Anordnung.

An der Hubbrücke (9) ist z.B. ein bewegliches Bodenteil (8') des Gehäuses (8) angeordnet und mittels Haltestangen (10') distanziert sowie gehalten. Es wird bei der Höhenverstellung der Hubbrücke (9) und der Stützarme (12,13) mitbewegt. Bei der Senkbewegung der Hubbrücke (9) wird das Gehäuse (8) an der Unterseite geöffnet, wobei zwischen dem abgesenkten Bodenteil (8') und dem unteren Gehäuserand ein Freiraum gebildet wird, durch den die Stützarme (12,13) aus dem Gehäuse (8) in die Gebrauchsstellung (27) ausschwenken können. Die Figuren 3 bis 8 sowie 12 bis 18 verdeutlichen diese Senkstellung und die Gebrauchsstellung (27). In der Hubstellung verschließt das Bodenteil (8') dicht die offene Unterseite des Gehäuses (8).

In einer anderen und nicht dargestellten Ausführungsform ist es möglich, das Bodenteil (8') starr am Gehäuse (8) anzuordnen und mit einer schlitzartigen Öffnung zu versehen, durch welche die eingeschwenkten Stützarme (12,13) aus dem Gehäuse heraus abgesenkt werden und dann in der Senkstellung ohne Behinderung in die Gebrauchsstellung (27) ausgeschwenkt werden können. In der angehobenen Stellung können die eingeschwenkten Stützarme (12,13) in die entsprechend angepasste Öffnung im Bodenteil (8') eintauchen und diese verschließen.

Das Basisteil (2) weist eine Abstützeinrichtung (49) auf, die zur Abstützung der Stützarme (12,13) in der ausgeschwenkten Gebrauchsstellung (27) dient. Die Stützarme (12,13) können dabei am Gehäuse (8) und über den Anbaubeschlag (6) am Fahrzeug (25) abgestützt werden. Die Abstützeinrichtung (49) kann über die Stützarme (12,13) eingeleitete Kräfte und Momente abstützen. Die Abstützwirkung kann bei Einnahme der eingeschwenkten Nichtgebrauchsstellung (26) wieder gelöst werden. Die Abstützeinrichtung (49) kann unterschiedlich ausgebildet sein. Figur 22 bis 26 verdeutlichen beispielhaft eine vorteilhafte Ausführungsform.

Die Abstützeinrichtung (49) weist z.B. vertikal wirkende Abstützmittel (50,51) sowie horizontal wirkende Abstützmittel (52,53) an den Stützarmen (12,13) und am Gehäuse (8) auf. Die vertikal wirkenden Abstützmittel (50,51) sind z.B. im Innenraum des Gehäuses (8) angeordnet. Die horizontal wirkenden Abstützmittel (52,53) können außenseitig angeordnet sein. Figur 26 zeigt die Abstütz- und Eingriffstellung der Abstützmittel (50,51,52,53) .

Das eine vertikal wirkende Abstützmittel (50) kann z.B. jeweils von einem horizontalen Anschlag, insbesondere einer Abkantung, am unteren Gehäuserand, gebildet werden, die mit einem Abstützmittel (51) am jeweiligen Stützarm (12,13) zusammenwirkt, das z.B. als vorspringende und in Stützstellung am Anschlag aufliegende Stütznase ausgebildet ist. Das Bodenteil (8') kann eine Aussparung zur dichten Aufnahme des Abstützmittels (50) in Schließstellung aufweisen. Bei eingeschwenkten Stützarmen (12,13) können die vertikal wirkenden Abstützmittel (50,51) außer Eingriff treten.

Das eine horizontal wirkende Abstützmittel (52) kann außenseitig an der Gehäusewand, insbesondere am Eckbereich, angeordnet sein. Es kann z.B. als Versteifungsplatte ausgebildet und auf die Gehäusewand aufgesetzt sein. Das andere horizontal wirkende Abstützmittel (53) kann z.B. als hochstehende Anschlagnase an der Oberseite des jeweiligen Stützarms (12,13) ausgebildet sein. Die Abstützmittel (52,53) wirken in Längsrichtung (34). Sie können beim Ausschwenken der Stützarme (12,13) in Eingriff und in Anschlagstellung gebracht werden. Der Eingriff kann formschlüssig sein und z.B. auch vertikal wirken. Dies kann z.B. über eine abgestufte Formgebung der Anschlagflächen der Abstützmittel (52,53) erreicht werden.

Das Gehäuse (8) wird in geeigneter Weise mit dem Anbaubeschlag (6) verbunden. Bei den Ausführungsformen von Figur 1 bis 10 werden die Tragarme (6') seitlich am Gehäuse (8) befestigt. Bei den Ausführungsformen von Figur 10 bis 18 wird das Gehäuse (8) über Haltebeschläge mit dem Querträger (36) verbunden. Es kann dabei gemäß Figur 14 bis 17 an der zur Fahrzeugfront weisenden Längsseite des Querträgers (36) angeordnet sein. Mittig und in Längsrichtung (34) hinter dem Gehäuse (8) ist die ggf. vorhandene Anhängerkupplung (35) am Querträger (36) montiert.

Die in Figur 10 bis 18 gezeigten Ausführungsformen des Lastenträgers (1) können die gleiche vorbeschriebene Ausbildung des Basisteils (2) mit Hub- und Schwenkeinrichtung (7), Gehäuse (8) und aufrechten Achsen (15) haben.

Der Lastenträger (1) weist das vorerwähnte Trägerteil (3,3') zur Aufnahme von einer Last oder Ladung (28,28') auf, welches mit dem Basisteil (2) lösbar verbunden werden kann. Es kann dabei auf den Stützarmen (12,13) abgestützt werden. In den gezeigten Ausführungsformen kann es auch mit den Stützarmen (12,13) lösbar verbunden und in der Gebrauchsstellung (27) an den Stützarmen (12,13) fixiert werden.

Die unterschiedlichen Trägerteile (3,3') weisen jeweils die erwähnte Tragbrücke (4) und ein Lastaufnahmemittel (5) für eine Last oder Ladung (28) auf. Das in Figur 10 bis 18 gezeigte Trägerteil (3') weist zusätzlich einen Hilfsträger (37) und ein weiteres Lastaufnahmemittel (5') für eine Last (28') auf.

In Figur 1 bis 9 ist das einzelne Lastaufnahmemittel (5) als Fahrradaufnahme und die Last (28) als Anordnung von ein oder mehreren, z.B. zwei, Fahrrädern, ausgebildet. Alternativ kann das Lastaufnahmemittel (5) anders ausgebildet sein. Figur 19 bis 21 zeigen ein einzelnes Lastaufnahmemittel (5), das multifunktional ist und wahlweise einen Behälter (28') oder eine andere Last, z.B. Fahrräder, aufnehmen kann.

Das in Figur 10 bis 18 gezeigte weitere Lastaufnahmemittel (5') ist z.B. als Fahrradaufnahme und die Last (28') als Anordnung von ein oder mehreren, z.B. zwei, Fahrrädern, ausgebildet.

Gemäß Figur 10 bis 18 kann das Lastaufnahmemittel (5) ebenfalls wahlweise als Fahrradaufnahme oder als Behälteraufnahme für eine aus Fahrrädern oder einem Behälter bestehende Last (28) ausgebildet sein. In Figur 10 bis 13 sind dabei zur Verdeutlichung beide Ausführungsmöglichkeiten des Lastaufnahmittels (5) und der Last (28) in gemeinsamer Anordnung gezeigt. In der Praxis wird üblicherweise nur das eine Lastaufnahmemittel (5) für die Box oder für die Fahrräder oder für eine andere Last benutzt.

Es ist aber auch möglich, mehrere unterschiedliche Lastaufnahmemittel (5) übereinander anzuordnen und lösbar miteinander zu verbinden. Hierbei kann z.B. ein Lastaufnahmemittel (5), z.B. die Fahrradaufnahme, unten angeordnet und mit der Tragbrücke (4) verbunden sein. Auf diesem ersten Lastaufnahmemittel (5) kann ein zweites Lastaufnahmemittel (5), z.B. eine Boxaufnahme, lösbar angeordnet und befestigt werden. Die Fahrradaufnahme bleibt dabei mit der Tragbrücke (4) verbunden.

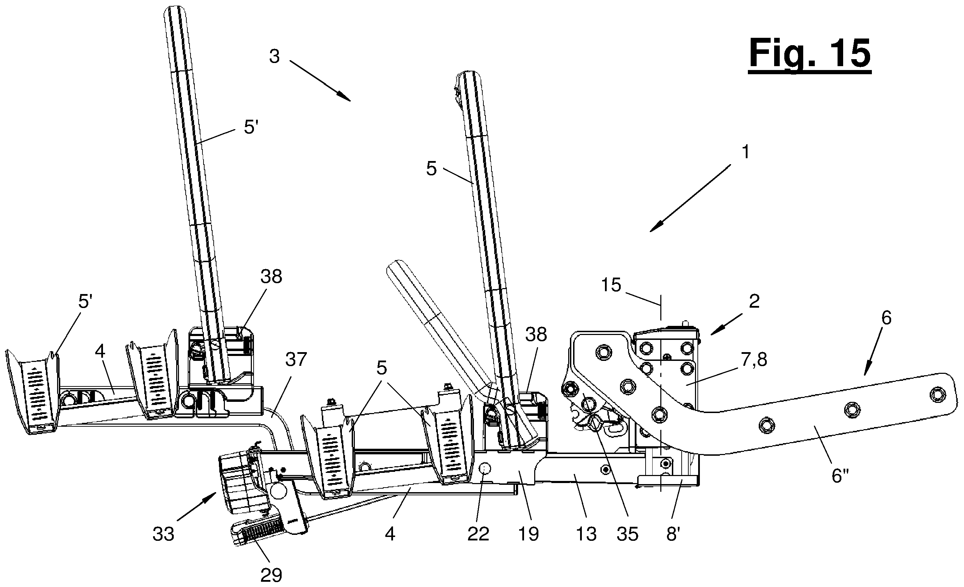

Mit dem flexibel nutzbaren Trägerteil (3') können am Fahrzeug (25) wahlweise gemäß Figur 10 bis 13 Fahrräder und eine Box oder gemäß Figur 14 und 15 nur Fahrräder oder nur Boxen in größerer, insbesondere doppelter, Zahl transportiert werden. Bei Nichtbenutzung oder Abbau des Hilfsträger (37) können eine einzelne Box oder eine kleinere Zahl Fahrräder befördert werden. Ein Last kann alternativ auch anders ausgebildet sein, z.B. als Ski- oder Snowboardausrüstung, als Kleinkraftrad oder dgl..

Die bei beiden Varianten des Trägerteils (3,3') vorhandene Tragbrücke (4) ist zur Verbindung mit dem Basisteil (2) ausgebildet. Sie kann am Basisteil (2) abgestützt und befestigt werden. Insbesondere kann die Tragbrücke (4) mit den ausgeschwenkten Stützarmen (12,13) verbunden werden. Sie kann auf den Stützarmen (12,13) aufliegen und insbesondere aufgesteckt werden. Die Tragbrücke (4) verbindet die ausgeschwenkten und in der Gebrauchsstellung (26) bevorzugt parallelen Stützarme (12,13) quer zur Längsachse (34) und stützt sie gegenseitig ab. In Figur 1 bis 5 und in Figur 10 bis 18 sind verschiedene Ausführungsformen der Tragbrücke (4) dargestellt.

Die Tragbrücke (4) weist randseitig zwei längliche Stützteile (19) auf, die mit jeweils einem Stützarm (12,13) lösbar verbunden werden können. Die Stützteile (19) haben jeweils eine gerade Ausrichtung längs der Achse (34). Das Stützteil (19) kann auf dem jeweiligen Stützarm (12,13) über einen großen Teil von dessen Länge flächig, bevorzugt plan, aufliegen. Es kann seinen Stützarm (12,13) außerdem an ein oder mehreren weiteren Seiten umgreifen. Das Stützteil (19) kann z.B. manschettenartig ausgebildet sein und kann von oben auf den jeweiligen Stützarm (12,13) aufgesetzt oder vom freien Vorderende aus auf den jeweiligen Stützarm (12,13) in dessen Längsrichtung aufgeschoben werden.

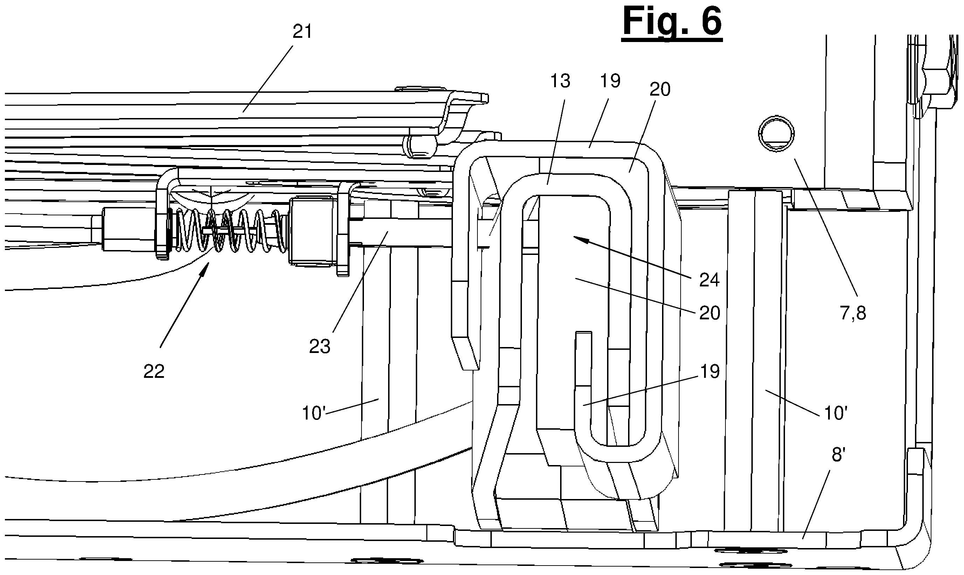

In den Ausführungsformen von Figur 1 bis 9 hat das Stützteil (19) ein Führungsmittel (20). Dieses kann für eine mehrachsige aufrechte und seitliche Führung und Abstützung des Stützteils (19) am zugeordneten Stützarm (12,13) sorgen. Figur 6 zeigt diese Anordnung in Frontansicht. Das Führungsmittel (20) kann in den U-förmigen Stützarm (12,13) von unten her eingreifen. Es kann reibungsarm und als Gleithilfe zum fronseitigen Aufstecken auf das Stützarmende ausgebildet sein. Das Führungsmittel (20) kann an der Seitenwand und an einem umgebogenen Rand oder Flansch des Stützteils (19) montiert sein. Bei den anderen Ausführungsformen von Figur 10 bis 18 kann ein Führungsmittel (20) ggf. entfallen oder anders ausgebildet sein.

Die Tragbrücke (4) weist ferner eine Versteifung (21) auf, welche die Stützteile (19) miteinander in Querrichtung verbindet und versteifend abstützt. Die Versteifung (21) kann z.B. gemäß Figur 1 bis 5 kreuzweise bzw. in X-Form ausgebildet sein. Bei den anderen Ausführungsformen wird die Versteifung (21) von mehreren Querstreben gebildet.

Das Trägerteil (3,3'), insbesondere die Tragbrücke (4), weist eine lösbare Verriegelung (22) für die fixierende Verbindung und Kupplung des Trägerteils (3,3') mit dem Basisteil (2) auf. Insbesondere dient die lösbare Verriegelung (22) für die fixierende Verbindung und Kupplung des Trägerteils (3,3') mit den Stützarmen (12,13). Die Stützmittel (19) können zur losen Auflage und Abstützung des Trägerteils (3,3'), insbesondere der Tragbrücke (4), auf den Stützarmen dienen.

Die Verriegelung (22) kann unterschiedlich ausgebildet sein. In den gezeigten Ausführungsbeispielen greift die Verriegelung am mittleren Bereich der Stützarme (12,13) an. Alternativ ist ein Angriff an anderer Stelle möglich. Eine Verriegelung (22) kann z.B. auch zwischen dem Gehäuse (8) und der Tragbrücke (4) bestehen. In den verschiedenen Varianten wirkt die Verriegelung (22) vorzugsweise dreidimensional. Sie bietet eine entsprechende dreidimensionale Fixierung.

In den gezeigten Ausführungsbeispielen ist die Verriegelung (22) zwischen der Tragbrücke (4), insbesondere der Aussteifung (21), und den Stützarmen (12,13) angeordnet.

Die Verriegelung (22) weist ein an der Tragbrücke (4) oder an anderer geeigneter Stelle angeordnetes Bedienteil (29) auf, welches auf einen oder mehrere bewegliche Riegel (23) einwirkt, die mit einer oder mehreren Riegelaufnahmen (24) an den Stützarmen (12,13) zusammenwirken. Vorzugsweise sind zwei Riegel (23) beidseits vorhanden, die mit jeweils einer Riegelaufnahme (24) an einem Stützarm (12,13) zusammenwirken. Die Riegelaufnahmen (24) können z.B. im mittleren Bereich des Stützarme (12,13) angeordnet sein.

Die Riegel (23) werden durch das Bedienelement (29) bewegt und greifen in der Riegelstellung formschlüssig in die jeweilige Riegelaufnahme (24) ein. Die Riegel (23) können federbelastet sein. Sie bewegen sich quer oder schräg zur Längsachse (34) und in entgegen gesetzten Richtungen.

Die Riegelaufnahme (24) kann in der einfachsten Ausführungsform als Durchgangsöffnung oder Bohrung ausgebildet sein, die in etwa den Riegelabmessungen entspricht und in die der Riegel (23) formschlüssig eintaucht.

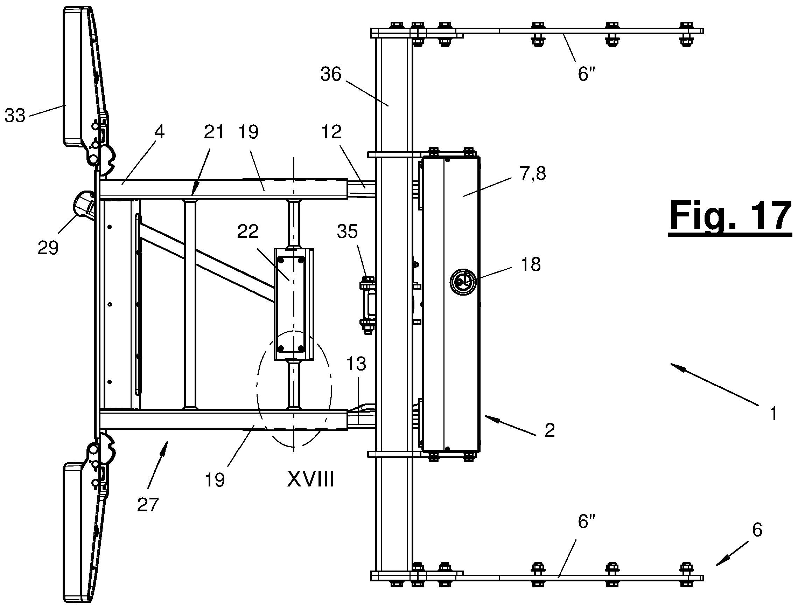

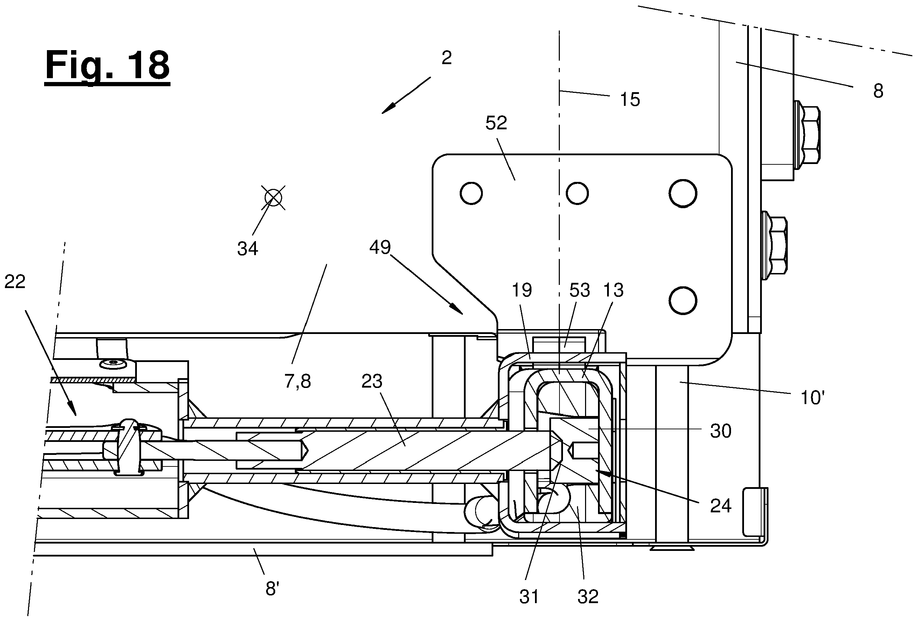

In den Ausführungsformen von Figur 10 bis 18 weist die Riegelaufnahme (24) ein Fixierelement (30) auf, welches federelastisch verformbar ist und sich in einer umgebenden Halterung (32) befindet. Das Fixierelement (30) verformt sich bei einer Beaufschlagung durch den zugeordneten Riegel (23) und verspannt sich dadurch in der umgebenden Halterung (32). Diese ist im jeweiligen Stützarm (12,13) ausgebildet. Figur 17 und 18 verdeutlichen diese Ausbildung.

Das Fixierelement (30) kann z.B. als komprimierbares Formstück aus Gummi, PU oder einem anderen geeigneten Material, insbesondere einem Polymer, bestehen. Es kann z.B. eine längs des Riegels (23) ausgerichtete Öffnung (31), insbesondere eine Sackbohrung, aufweisen. In diese kann der beim Schließen der Verriegelung (22) vorgeschobene Riegel (23) mit seiner konischen Spitze eintauchen. Er kann dabei das Fixierelement (30) in allen drei translatorischen Raumachsen komprimieren und verformen.

Der Riegel (23) greift dabei jeweils durch eine entsprechende Öffnung im Stützteil (19). Der Riegel (23) und das Fixierelement (30) sind dabei gegenseitig dreidimensional fixiert und das in der Halterung (32) eingespannte Fixierelement (30) ist gegenüber dem jeweiligen Stützarm (12,13) dreidimensional fixiert und formschlüssig geführt.

Das Trägerteil (3,3') kann am rückseitigen Ende einen Leuchtenträger (33) aufweisen. An diesem kann auch ein Kennzeichenhalter befestigt sein. Der Leuchtenträger (33) kann am rückwärtigen Ende der Tragbrücke (4) fest oder lösbar angeordnet sein. Der Leuchtenträger (33) kann auch einklappbar gestaltet sein. Bei einem mehrständigen Trägerteil (3') kann der Hilfsträger (37) mit der Last (28') in Axialrichtung (34) nach hinten über den Leuchtenträger (33) hinausragen.

Die Stromversorgung des Lastenträgers (1) und seines Basisteils (2) sowie seines angebundenen Trägerteils (3,3') kann über die Energieversorgung (18) erfolgen. Aus den Gehäuse (8) kann eine Leitung (39) entlang eines Stützarms (12,13) zu einer Steckdose (42) verlegt sein, in die beim Einbau eines Trägerteils (3,3') ein Stecker (41) eingeführt werden kann. Dies kann ggf. automatisch erfolgen. Die Steckdose (42) kann hierbei an der Stirnseite eines Stützarms (12,13) und das Steckerteil (41) an einem Stützmittel (19) angeordnet sein. Die Anordnung kann auch umgekehrt sein.

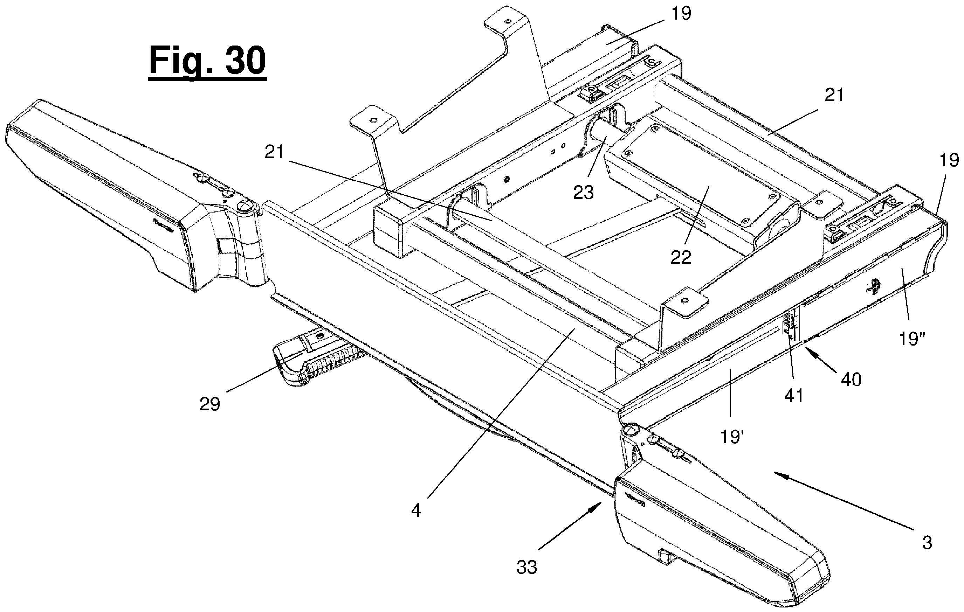

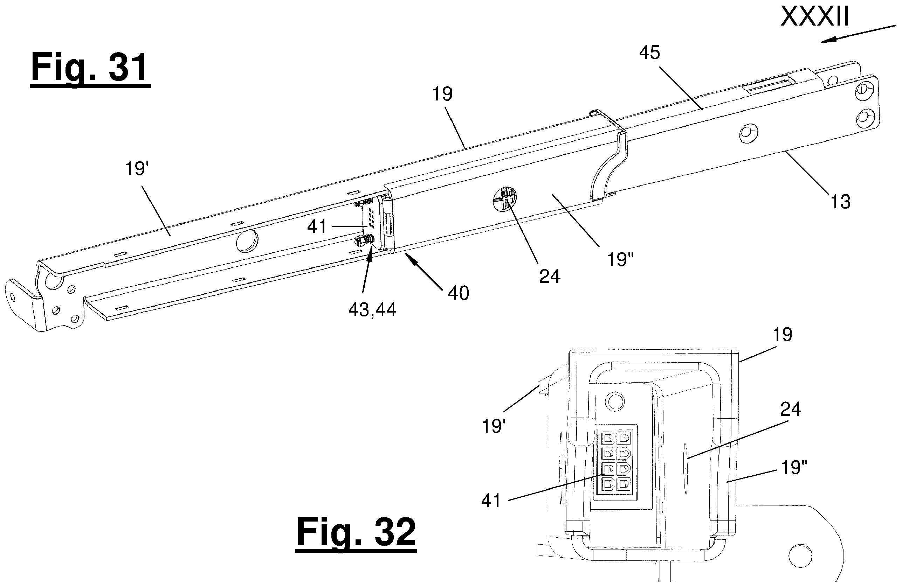

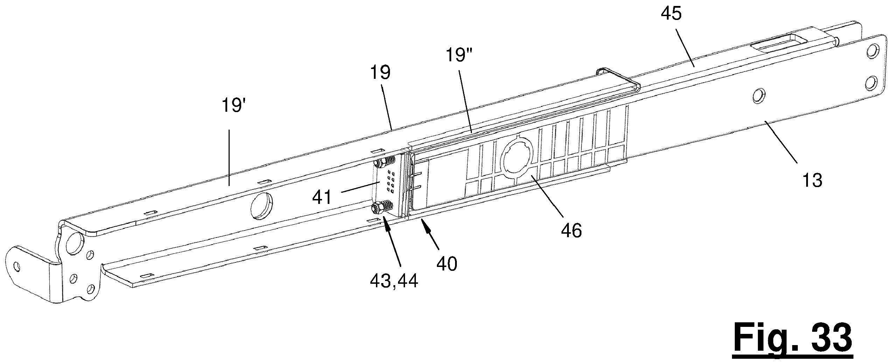

Die vorgenannte Steckverbindung (40) ist in Figur 26 bis 36 in verschiedenen Ausführungsformen dargestellt. Die Steckverbindung (40) dient der erwähnten Übertragung von Energie und/oder Signalen zwischen zumindest einem Stützarm (12,13) und dem Trägerteil (3,3'), insbesondere dessen Stützteil (19).

Die Steckverbindung (40) befindet sich im Bereich der mechanischen Verbindungsstelle zwischen dem betreffenden Stützarm (12,13) und dem Stützteil (19). In den gezeigten Ausführungsbeispielen ist nur eine Steckverbindung (40) vorhanden und einem Stützarm (13) zugeordnet.

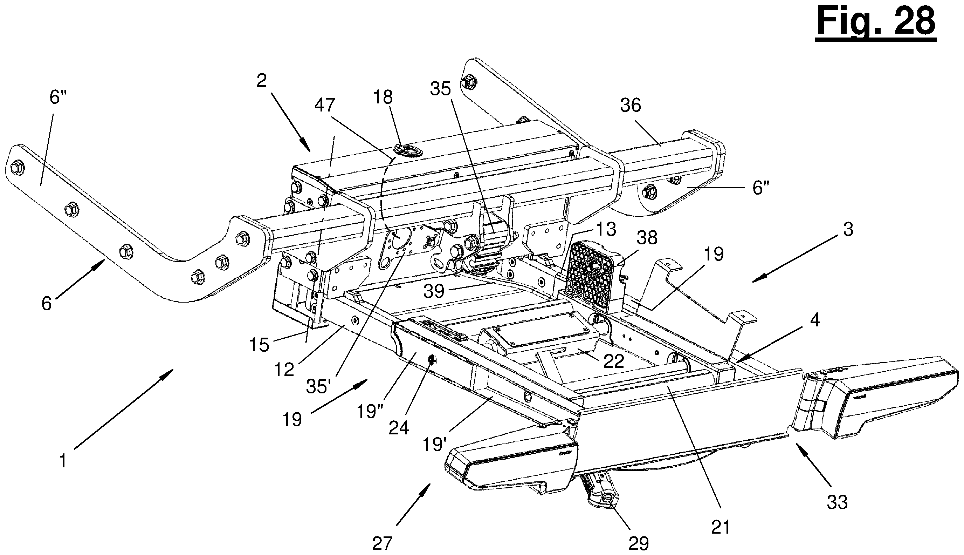

Wie Figur 28 bis 33 verdeutlichen, ist die Steckverbindung (40) in der Gebrauchsstellung (27) der ausgefahrenen bzw. ausgeschwenkten Stützarme (12,13) außerhalb der Fahrzeugkontur angeordnet. Sie befindet sich vorzugsweise mit Abstand hinter der Fahrzeugaußenkontur, insbesondere dem Fahrzeugheck.

Das Stützteil (19) ist für eine formschlüssige und bevorzugt steckbare Befestigung am jeweiligen Stützarm (12,13) ausgebildet. Das Stützteil (19) hat in der Ausführungsform von Figur 28 bis 36 jeweils eine längliche Armaufnahme (19"). Die Armaufnahme (19") hat in den Ausführungsbeispielen eine gerade Hülsen- oder Rohrform und wird auf den zapfenförmigen Stützarm (12,13) aufgesteckt. Die Anordnung kann auch umgekehrt sein, wobei der Stützarm (12,13) eine Rohrform oder Hülsenform aufweist und die Armaufnahme (19") zapfenartig ausgebildet ist.

Die Steckverbindung (40) ist bevorzugt elektrisch ausgebildet. Alternativ ist eine andere Verbindungs- und Übertragungsmöglichkeit für Energie und/oder Signale möglich. Die Steckverbindung (40) weist zwei oder mehr lösbar miteinander verbindbare Steckteile (41,42) auf. Bei der Verbindung der Steckteile (41,42) werden Energie und/oder Signale elektrisch und konduktiv übertragen. Die Steckteile (41,42) können bei der Verbindung formschlüssig ineinander greifen. Ein Steckteil (41) ist am Stützarm (12,13) und ein zu verbindendes anderes Steckteil (42) ist am Trägerteil (3,3'), insbesondere am Stützteil (19), angeordnet.

Die Steckteile (41,42) sind jeweils mehrpolig ausgebildet. Bei einer formschlüssigen Verbindung ist das eine Steckteil (41) als Stecker und das andere Steckteil (42) als Steckdose ausgebildet. Der Stecker (41) ist in der bevorzugten Ausführungsform in der hülsenförmigen Armaufnahme (19") angeordnet. Die Steckdose (42) befindet sich am betreffenden Stützarm (12,13). Die Steckteile (41,42) sind in den Ausführungsformen von Figur 28 bis 36 jeweils stirnseitig an der Armaufnahme (19") und am Stützarm (12,13) angeordnet und in Steckrichtung bzw. Armrichtung ausgerichtet.

Beim Befestigen des Trägerteils (3,3'), insbesondere der Armaufnahme (19"), am Stützarm (12,13) wird eine lineare Steckbewegung ausgeführt, wobei die Armaufnahme (19") auf den Stützarm (12,13) aufgeschoben wird. Dies ist eine geführte Relativbewegung. Beim mechanischen Zusammenstecken wird auch die Steckverbindung (40) geschlossen, insbesondere der Stecker (41) mit seinen Kontaktstiften in die Aufnahmeöffnungen der Steckdose (42) eingeführt.

Die Steckverbindung (40) ist federnd ausweichfähig ausgebildet. Zumindest an einem der zu verbindenden Steckteile (41,42) ist eine Aufnahme (43) mit einer Federung (44) für eine federnde Ausweichfähigkeit angeordnet.

Wie Figur 28 bis 36 verdeutlichen, ist z.B. das Steckteil (41), insbesondere der Stecker, an der Armaufnahme (19") federnd ausweichfähig angeordnet. Die Armaufnahme (19") ist an ihrem zum Basisteil (2) weisenden Stirnende offen und an ihrem rückwärtigen Stirnende mit einer Querwand verschlossen.

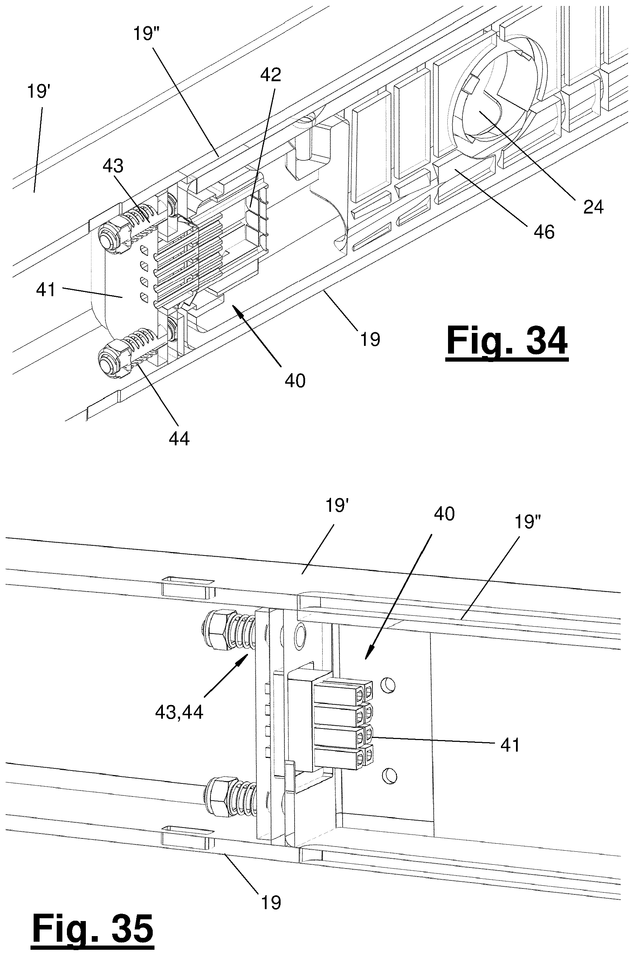

Gemäß Figur 34 und 35 weist das Steckteil (41) eine verbreiterte Grundplatte auf und ragt mit seinen quer von der Grundplatte abstehenden Steckkontakten durch eine Öffnung in der Querwand der Armaufnahme (19"). Die Grundplatte bleibt dabei außerhalb der Armaufnahme (19") und ist mit einer von zwei Führungsstiften gebildeten Aufnahme (43) verbunden. Auf dem parallelen Führungsstiften ist jeweils eine Feder (44) außenseitig zwischen der Bodenplatte und einem verbreiterten Stiftende aufgezogen. Die Aufnahme (43) bzw. die Führungsstifte sind an der Querwand der Armaufnahme (19") montiert. Das Steckteil (41) kann mit seiner Grundplatte auf den Führungsstiften gegen Federkraft gleiten. Alternativ kann die Aufnahme (43) als Führungsbuchse oder in anderer Weise ausgebildet sein.

Das in den hohlen Innenraum der Armaufnahme (19") ragende Steckteil (41) kann dort mit dem anderen Steckteil (42), insbesondere einer Steckdose verbunden, insbesondere formschlüssig zusammengesteckt werden. Das Steckteil (42) befindet sich am stirnseitigen Ende des Stützarms (12,13).

Der Stützarm (12,13) weist ein Armgehäuse (45) und einen darin angeordneten Einsatz (46) auf, an dessen stirnseitigem Ende das Steckteil (42) montiert ist. Der Einsatz (46) kann aus einem elektrisch isolierenden Material, z.B. Kunststoff, bestehen. Das Steckteil (42) ist am Stirnende des Einsatzes (46) befestigt. Die Befestigung kann starr sein oder ein axiales Bewegungsspiel in Armrichtung haben. Das vordere Ende des Einsatzes (46) kann hohl ausgebildet sein.

Der Einsatz (46) kann die vorbeschriebene Riegelaufnahme (24) aufweisen. Am Armgehäuse (45) kann eine passende Durchgangsöffnung innenseitig vorhanden sein. Das Stützteil (19), insbesondere die Armaufnahme (19") kann an der Riegelseite ebenfalls eine Durchlassöffnung für den Riegel (23) aufweisen.

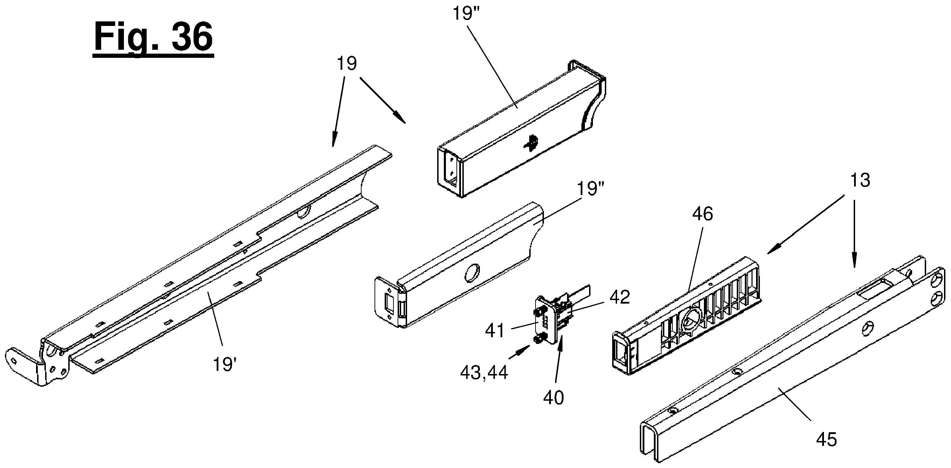

Die Armaufnahme (19") kann ebenfalls aus einem elektrisch isolierenden Material, insbesondere aus Kunststoff, bestehen. Sie kann mehrteilig ausgebildet sein und kann z.B. gemäß Figur 36 ein bevorzugt aus Kunststoff bestehendes Rohrteil sowie ein abgewinkeltes Befestigungsteil aufweisen. Das Stützteil (19) kann ferner ein z.B. schienenartiges Stützmittel (19') aufweisen, an dessen zum Basisteil (2) weisenden Ende die Armaufnahme (19") angeordnet und vorzugsweise formschlüssig geführt ist. Das Befestigungsteil und das Stützmittel (19') können z.B. aus Metall bestehen und können das eingesetzte Rohrteil umfangseitig und rückseitig umgeben.

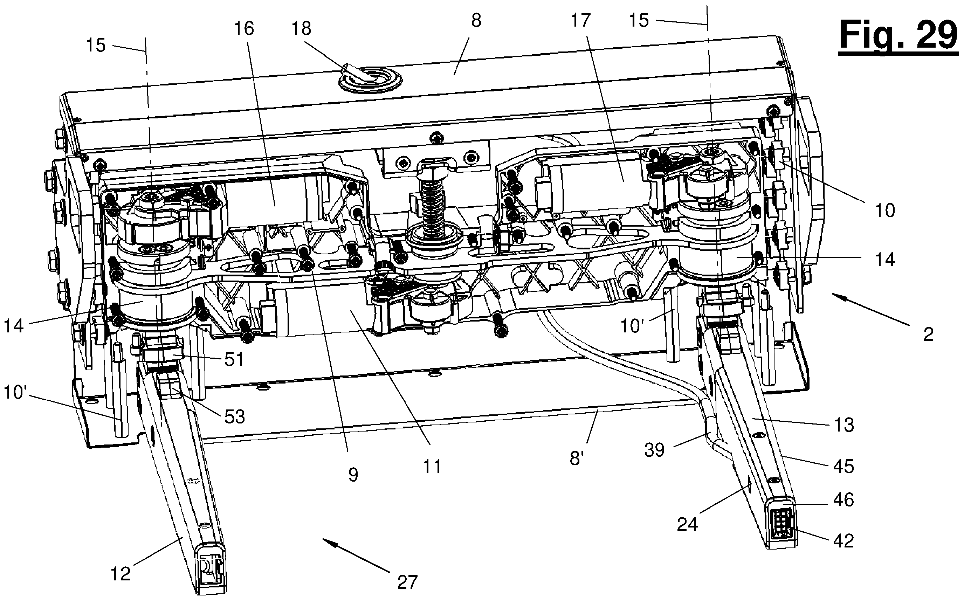

Das Steckteil (42) am Stützarm (12,13) ist mit der Energieversorgung (18) durch eine Leitung (39), z.B. ein Elektrokabel, verbunden. Wie Figur 28 und 29 verdeutlichen, ist die Leitung (39) am Stützarm (12,13) entlang geführt. Sie ist bewegungstolerant, insbesondere schwenktolerant, ausgebildet. In der gezeigten Ausführung ist die Leitung (39) biegeelastisch.

Das Steckteil (41) am Stützteil (19) kann mit ein oder mehreren Verbrauchern am Trägerteil (3,3'), insbesondere am Leuchtenträger (33), ebenfalls über eine nicht dargestellte Leitung verbunden sein. Diese Leitung kann mit dem Steckteil (41) fest verbunden sein.

Wie in den Zeichnungen angedeutet, ist es auch möglich, das Steckteil (41) als Adapter auszubilden und an der Leitung des Trägerteils (3,3') mindestens einen Stecker anzubringen, der mit dem Adapter bedarfsweise lösbar verbunden wird. Durch eine entsprechende Gestaltung des Steckmittels (41) ist es möglich, nicht nur Verbraucher am Leuchtenträger (33), sondern auch eventuelle Verbraucher an einer Lastaufnahme (5,5'), z.B. Leuchten, elektrisch oder auf andere Weise betätigbare Verschlüsse oder dgl. mit Energie und ggf. Signalen zu versorgen. Am Leuchtenadapter (33) können verschiedene Leuchten, Rückleuchten, Bremsleuchten, Kennzeichenbeleuchtung, Blinker, Rückfahrleuchte oder dgl. angebracht sein.

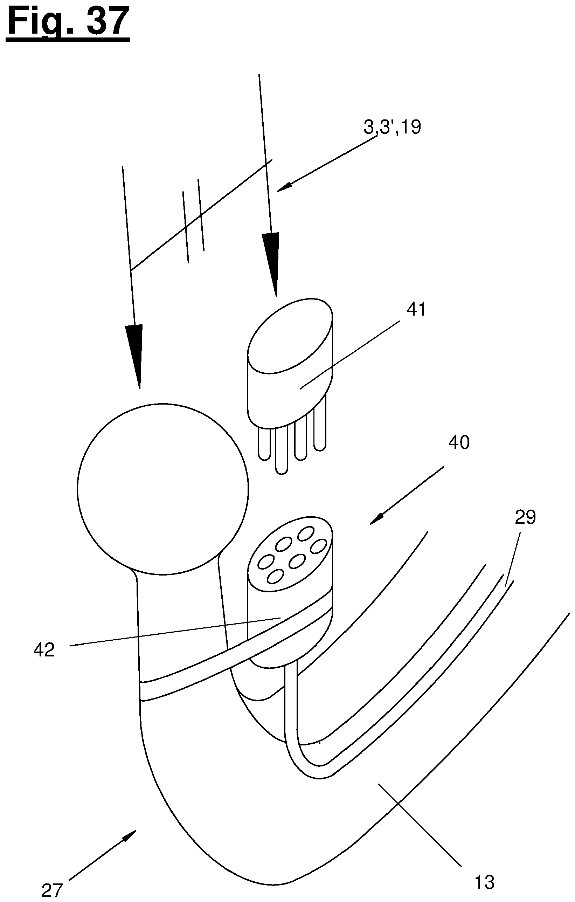

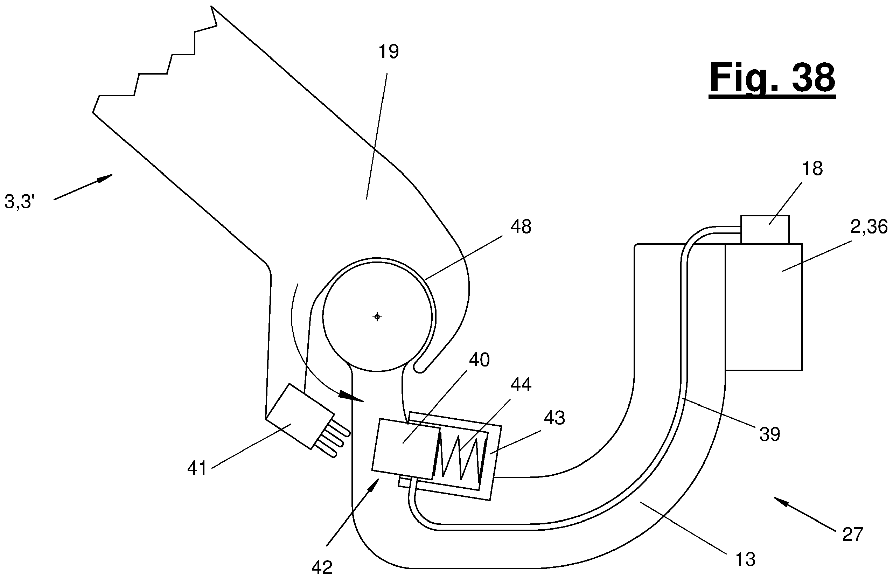

Figur 37 und 38 zeigen andere Varianten der Ausbildung eines Stützarms (12,13) eines Trägerteils (3,3') und einer Steckverbindung (40). Der gezeigte Stützarm (13) ist als gebogener Kugelhals ausgebildet. Er kann einzeln oder mehrfach vorhanden und an einem besagten Querträger (36) oder Basisteil (2) beweglich angeordnet sein. Er kann z.B. mit einer entsprechenden, ggf. motorisch angetriebenen, Mechanik zwischen einer verborgenen Nichtgebrauchsstellung und der gezeigten ausgefahrenen Gebrauchsstellung (27) bewegt, insbesondere verschwenkt werden. Der gebogene Kugelhals weist am freien Ende eine Kugel auf. Diese kann einer konventionellen Kupplungskugel einer Kugelkopfkupplung entsprechen.

Das Stützteil (19) des Trägerteils (3,3') weist zur Verbindung mit der Kugel eine runde Pfanne (48) auf. Diese kann die Form einer Kugelpfanne wie bei einer üblichen Anhängerkupplung aufweisen.

Figur 37 und 38 zeigen jeweils eine Steckverbindung (40) mit zwei bevorzugt formschlüssig verbindbaren Steckteilen (41,42). Diese sind seitlich am Stützarm (13) und am Stützteil (19) angeordnet. Sie können dabei einen Abstand zum stirnseitigen Ende des Stützarms (13) und des Stützteils (19) haben. Die Leitung (29) ist am Stützarm (39) entlang verlegt und ist bewegungstolerant, insbesondere schwenktolerant. Sie ist endseitig mit einer Energieversorgung (18) verbunden.

Bei allen gezeigten Varianten kann die Steckverbindung (40) bei der mechanischen Verbindung und Befestigung des losen Trägerteils (3,3') an den ein oder mehreren Steckarmen (12,13) automatisch geschlossen werden. Bei der Variante von Figur 37 sind die seitlichen Steckteile (41,42) derart zueinander ausgerichtet und angeordnet, dass sie bei einem vertikalen Aufstecken des Stützteils (19) auf dem Stützarm (13) automatisch zusammengesteckt und verbunden werden. Bei der Variante von Figur 38 sind die Steckteile (41,42) schräg zur Steckrichtung ausgerichtet. Sie können durch eine mit Pfeil markierte Schwenkbewegung des aufgesteckten Stützteils (19) verbunden werden, wobei diese Relativbewegung über den Kontakt zwischen Kugel und Pfanne (48) geführt ist.

Bei den Varianten von Figur 37 und 38 kann ebenfalls eine Aufnahme (43) und eine Federung (44) für eine federnde Ausweichfähigkeit von zumindest einem Steckteil (41,42) vorhanden sein.

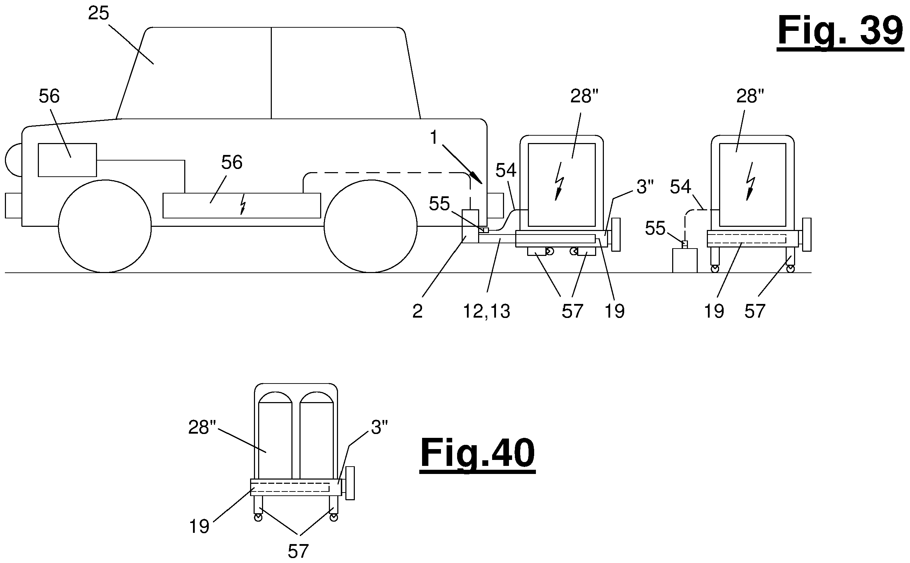

Figur 39 zeigt eine weitere Variante des Lastenträgers (1), der für besonders schwere Lasten (28") ausgebildet ist. Eine solche Last (28") kann zum Beispiel ein in Figur 39 gezeigter Energiespeicher sein. Diese ist in der gezeigten Ausführungsform als elektrische Range-Extender-Batterie für ein Elektrofahrzeug (25) ausgebildet, welches einen Elektromotor und eine Systembatterie bzw. einen Systemakku aufweist. Diese werden als Verbraucher (56) bezeichnet.

Das Basisteil (2) kann in der vorbeschriebenen Weise ausgebildet sein und weist zwei oder mehr in die Gebrauchsstellung (27) um jeweils eine aufrechte Achse (15) ausschwenkbare Stützarme (12,13) auf. Die Schwenkarme (12,13) sind in der vorbeschriebenen Weise heb- und senkbar am Basisteil (2) angeordnet. Alternativ kann das Basisteil (2) in anderer Weise ausgebildet sein, z.B. ohne oder mit einer anderen Hebe- und Senkfunktion.

Das Trägerteil (3") nimmt die Last (28") auf. Es kann in der vorbeschriebenen Weise ausgebildet sein und eine Tragbrücke (4) mit einer Versteifung (21) sowie mit Stützteilen (19) aufweisen. Das Trägerteil (3") kann auf die ausgeschwenkten Stützarme (12,13) stirnseitig aufgeschoben oder von oben her aufgesteckt werden. Eine elektrische Steckverbindung (40) der vorbeschriebenen Art kann ebenfalls vorhanden sein.

Der Lastenträger (1) weist eine Medienverbindung (54) zwischen der Range-Extender-Batterie (28") und zumindest einem Verbraucher (56) auf. Die Medienverbindung (54) wird von einer geeigneten elektrischen Leitung gebildet. Diese kann mittels eines bevorzugt lösbaren Medienanschlusses (55) mit einer zum Verbraucher führenden Leitung im Fahrzeug (25) verbunden werden. Der Medienanschluss kann aus Steckteilen gebildet werden, von denen eines an der Medienverbindung (54) und das andere am Fahrzeug (25), insbesondere am Basisteil (2), angeordnet ist. Das fahrzeugseitige Steckerteil kann zum Beispiel am Anbaubeschlag (6), insbesondere am Querträger (36), angeordnet sein.

Die Range-Extender-Batterie (28") kann mit dem Trägerteil (3") dauerhaft verbunden sein. Sie kann in einem umgebenden Gehäuse angeordnet sein. In ähnlicher Weise kann auch ein anderer Medienspeicher, insbesondere Energiespeicher, ausgebildet und angeordnet werden. Dies kann zum Beispiel ein Gastank, ein Treibstofftank oder dgl. sein. Die Medienverbindung (54) und der Medienanschluss (55) sind hierfür entsprechend angepasst.

Das Trägerteil (3") kann ein angebautes oder anbaubares Tragmittel (57) aufweisen. Das Tragmittel (57) kann an der Unterseite des Trägerteils (3") angeordnet sein. Es kann verstellbar, insbesondere höhenverstellbar, ausgebildet sein. Das Tragmittel (57) kann für den Fahrbetrieb entfernt oder deaktiviert werden.

In der gezeigten Ausführungsform wird das Tragmittel (57) von z.B. steckbaren oder schwenkbaren Stützfüßen gebildet, die an der Unterseite Rollen für einen Transport des Trägerteils (3") aufweisen können. Eine Höhenverstellung kann z.B. durch eine Veränderung der Fußlänge mittels eines mechanischen Spindel- oder Zahnstangentriebs oder dgl. mit manueller Betätigung durch eine Kurbel oder mittels eines Antriebs, z.B. eines Elektromotors oder dgl., realisiert werden

Das Tragmittel (57) dient zur Abstützung des Trägerteils (3") und der Last (28") im abgenommenen und von den Stützarmen (12,13) entfernten Zustand. Das Tragmittel (57) entlastet einen Bediener und erleichtert die Handhabung des Trägerteils (3") und der Last (28"). Es ermöglicht auch ein einfaches Andocken und Abdocken des Trägerteils (3") an und von den Stützarmen (12,13) durch eine relative Fahrbewegung zwischen dem Fahrzeug (25) und dem in geeigneter Höhe positionierten Trägerteil (3").

Wie Figur 39 verdeutlicht, kann die Range-Extender-Batterie (28") in der abgenommenen Stellung an einer zum Beispiel stationären Ladestation wieder aufgeladen werden. Bei einem Elektrofahrzeug (25) kann ein beschleunigtes Nachladen durch Wechsel der Range-Extender-Batterie erfolgen.

Figur 40 zeigt ein Trägerteil (3") für eine andere schwere Last (28"), die z.B. von einer oder mehreren Gasflaschen oder einem Gastank gebildet wird. Dieser Medienspeicher kann ebenfalls schnell gewechselt werden.

Abwandlungen der gezeigten und beschriebenen Ausführungsformen sind in verschiedener Weise möglich. Insbesondere können die Merkmale der vorbeschriebenen Ausführungsbeispiele und der genannten Abwandlungen miteinander kombiniert und ggf. auch vertauscht werden.

### BEZUGSZEICHENLISTE

- 1: Lastenträger, Heckträger
- 2: Basisteil
- 3: Trägerteil, Fahrradträger
- 3': Trägerteil, Boxenträger
- 3": Trägerteil, Medienspeicherträger
- 4: Tragbrücke
- 5: Lastaufnahmemittel, Räderaufnahme
- 5': Lastaufnahmemittel, Boxaufnahme
- 6: Anbaubeschlag
- 6': Tragarm
- 6": Anbauflansch
- 7: Hub- und Schwenkeinrichtung
- 8: Gehäuse
- 8': Bodenteil
- 9: Hubbrücke
- 10: Führung
- 10': Haltestange
- 11: Antrieb, Hubantrieb
- 12: Stützarm
- 13: Stützarm
- 14: Schwenklager
- 15: Achse, Hochachse
- 16: Antrieb, Schwenkantrieb
- 17: Antrieb, Schwenkantrieb
- 18: Energieversorgung
- 19: Stützteil, Manschette
- 19': Stützmittel
- 19": Armaufnahme
- 20: Führungselement
- 21: Versteifung
- 22: Verriegelung
- 23: Riegel
- 24: Riegelaufnahme
- 25: Fahrzeug, Kraftfahrzeug
- 26: Nichtgebrauchsstellung
- 27: Gebrauchsstellung
- 28: Ladung, Fahrrad
- 28': Ladung, Behälter, Box
- 28": Ladung, Medienspeicher
- 29: Bedienelement
- 30: Fixierelement
- 31: Öffnung, Bohrung
- 32: Halterung
- 33: Leuchtenträger
- 34: Längsachse, Fahrtrichtung
- 35: Anhängerkupplung
- 35': Steckdosenhalter
- 36: Querträger
- 37: Hilfsträger
- 38: Befestigungsmittel
- 39: Leitung
- 40: Steckverbindung
- 41: Steckteil, Stecker
- 42: Steckteil, Steckdose
- 43: Aufnahme
- 44: Federung
- 45: Armgehäuse
- 46: Einsatz
- 47: Zuleitung
- 48: Pfanne
- 49: Abstützeinrichtung
- 50: Abstützmittel vertikal, Gehäuserand
- 51: Abstützmittel vertikal, Stütznase
- 52: Abstützmittel horizontal, Versteifungsplatte
- 53: Abstützmittel horizontal, Anschlagnase
- 54: Medienverbindung
- 55: Medienanschluss
- 56: Verbraucher
- 57: Tragmittel

## Patentansprüche

1. Lastenträger für ein Fahrzeug (25), insbesondere Kraftfahrzeug, wobei der Lastenträger (1) mehrere, insbesondere zwei, bewegliche und seitlich beabstandete Stützarme (12,13) aufweist, die für die lösbare Befestigung eines Trägerteils (3,3',3") ausgebildet sind, wobei der Lastenträger (1) ein am Fahrzeug (25) fest anzuordnendes Basisteil (2) aufweist, an dem die mehreren Stützarme (12,13) gemeinsam angeordnet sind, wobei die mehreren Stützarme (12,13) gemeinsam am Basisteil (10) höhenverstellbar, insbesondere höhenverschieblich, und um jeweils eine eigene aufrechte Achse (15) schwenkbar gelagert sind, wobei
das Basisteil (2) eine Hub- und Schwenkeinrichtung (7) für die Stützarme (12,13) sowie ein verschließbares Gehäuse (8) aufweist, in dem die Hub- und Schwenkeinrichtung (7) und die Stützarme (12,13) aufgenommen sind.

2. Lastenträger nach Anspruch 1, **dadurch gekennzeichnet, dass** die Stützarme (12,13) eine gerade Ausrichtung aufweisen und quer zur aufrechten Achse (15) ausgerichtet sind.

3. Lastenträger nach einem der vorhergehenden Ansprüche, **dadurch gekennzeichnet, dass** die Stützarme (12,13) zwischen einer Nichtgebrauchsstellung (26) und einer Gebrauchsstellung (27) beweglich sind, wobei sie aus der Nichtgebrauchsstellung (26) abgesenkt und anschließend in die Gebrauchsstellung (27) ausgeschwenkt werden, wobei die Stützarme (12,13) in der Nichtgebrauchsstellung (26) verborgen im Gehäuse (8) angeordnet sind und in der Gebrauchsstellung (26) aus dem geöffneten Gehäuse (8) ragen.

4. Lastenträger nach Anspruch 3, **dadurch gekennzeichnet, dass** die bevorzugt konischen Stützarme (12,13) in der Gebrauchsstellung (27) und in der Nichtgebrauchsstellung (26) in der Vertikalen auf gleicher Höhe angeordnet sind und in der eingeschwenkten Nichtgebrauchsstellung in Axialrichtung (34) des Fahrzeugs hintereinander und ggf. aneinander liegen.

5. Lastenträger nach einem der vorhergehenden Ansprüche, **dadurch gekennzeichnet, dass** die Hub- und Schwenkeinrichtung (7) eine höhenverstellbare, geführte und motorisch angetriebene, Hubbrücke (9) aufweist, an der die Stützarme (12,13) gemeinsam angeordnet und schwenkbar gelagert sind.

6. Lastenträger nach einem der vorhergehenden Ansprüche, **dadurch gekennzeichnet, dass** an der Hubbrücke (9) ein Bodenteil (8') des Gehäuses (8) angeordnet ist und bei der Höhenverstellung mitbewegt wird.

7. Lastenträger nach einem der vorhergehenden Ansprüche, **dadurch gekennzeichnet, dass** das Basisteil (2) eine Abstützeinrichtung (49) für die Abstützung der Stützarme (12,13), insbesondere in der ausgeschwenkten Gebrauchsstellung (27), aufweist, wobei die Abstützeinrichtung (49) zusammenwirkende Abstützmittel (50,51,52,53) am Gehäuse (8) und an den Stützarmen (12,13) aufweist.

8. Lastenträger nach einem der vorhergehenden Ansprüche, **dadurch gekennzeichnet, dass** der Lastenträger (1) ein mit dem Basisteil (2) lösbar verbindbares Trägerteil (3,3',3") zur Aufnahme einer Last oder Ladung (28,28',28") aufweist, wobei das Trägerteil (3,3',3") ein bevorzugt brückenartiges Tragteil (4) und ein Lastaufnahmemittel (5) aufweist.

9. Lastenträger nach einem der vorhergehenden Ansprüche, **dadurch gekennzeichnet, dass** das Tragteil (4) mit den ausgeschwenkten Stützarme (12,13) verbindbar, insbesondere steckbar, ausgebildet ist, wobei das Tragteil (4) die ausgeschwenkten, insbesondere parallelen, Stützarme (12,13) quer verbindet und abstützt sowie jeweils ein mit einem Stützarm (12,13) lösbar verbindbares Stützteil (19) aufweist.

10. Lastenträger nach einem der vorhergehenden Ansprüche, **dadurch gekennzeichnet, dass** das Trägerteil (3,3',3"), insbesondere das Tragteil (4), eine lösbare Verriegelung (22) für die fixierende Verbindung des Trägerteils (3,3',3") mit dem Basisteil (2), insbesondere mit den Stützarmen (12,13), aufweist.

11. Lastenträger nach einem der vorhergehenden Ansprüche, **dadurch gekennzeichnet, dass** der Lastenträger (1) am Gehäuse (8) eine Energieversorgung (18), insbesondere Stromversorgung, für sein Basisteil (2) sowie eines angebundenen Trägerteils (3,3',3") aufweist.

12. Lastenträger nach Anspruch 11, **dadurch gekennzeichnet, dass** der Lastenträger (1) eine bevorzugt einzelne Steckverbindung (40) zur Übertragung von Energie und/oder Signalen zwischen Stützarm (12,13) und Trägerteil (3,3',3") aufweist.

13. Lastenträger nach Anspruch 12, **dadurch gekennzeichnet, dass** die bevorzugt elektrische Steckverbindung (40) lösbar miteinander verbindbare Steckteile (41,42) aufweist, wobei ein Steckteil (41) am Stützarm (12,13) und ein Steckteil (42) am Trägerteil (3,3',3"), insbesondere am Stützteil (19), angeordnet ist und wobei die Steckverbindung (40) dazu ausgebildet ist, beim Befestigen des Trägerteils (3,3',3") am Stützarm (12,13) durch eine bevorzugt geführte Relativbewegung zwischen Trägerteil (3,3',3"), insbesondere Stützteil (19), und Stützarm (12,13) geschlossen zu werden.

14. Lastenträger nach einem der Ansprüche 11 bis 13, **dadurch gekennzeichnet, dass** die Energieversorgung (18) des Lastenträgers (1) eine Zuleitung (47) zu einem Steckdosenhalter (35') oder einer Steckdose einer am Lastenträger zusätzlich angeordneten zentralen Anhängerkupplung (35) aufweist.

## Claims

1. Load carrier for a vehicle (25), in particular a motor vehicle, wherein the load carrier (1) has a plurality of, in particular two, movable and laterally spaced-apart support arms (12, 13) which are configured for the releasable fastening of a carrier part (3, 3', 3"), wherein the load carrier (1) has a base part (2) which is to be fixedly arranged on the vehicle (25) and on which the plurality of support arms (12, 13) are jointly arranged, wherein the plurality of support arms (12, 13) are jointly mounted on the base part (10) so as to be vertically adjustable, in particular vertically displaceable, and so as to each be pivotable about its own upright axis (15), wherein the base part (2) has a lifting and pivoting device (7) for the support arms (12, 13) and a closable housing (8) in which the lifting and pivoting device (7) and the support arms (12, 13) are received.

2. Load carrier according to Claim 1, **characterized in that** the support arms (12, 13) have a straight orientation and are oriented transversely with respect to the upright axis (15).

3. Load carrier according to either of the preceding claims, **characterized in that** the support arms (12, 13) are movable between a non-use position (26) and a use position (27), wherein they are lowered from the non-use position (26) and then pivoted out into the use position (27), wherein the support arms (12, 13) are arranged hidden in the housing (8) in the non-use position (26) and project from the open housing (8) in the use position (26).

4. Load carrier according to Claim 3, **characterized in that** the preferably conical support arms (12, 13) are arranged at the same height in the vertical in the use position (27) and in the non-use position (26) and lie one behind the other and possibly one against the other in an axial direction (34) of the vehicle in the pivoted-in non-use position.

5. Load carrier according to one of the preceding claims, **characterized in that** the lifting and pivoting device (7) has a vertically adjustable, guided and motor-driven lifting bridge (9) on which the support arms (12, 13) are jointly arranged and pivotably mounted.

6. Load carrier according to one of the preceding claims, **characterized in that** a bottom part (8') of the housing (8) is arranged on the lifting bridge (9) and is moved with it during the vertical adjustment.

7. Load carrier according to one of the preceding claims, **characterized in that** the base part (2) has a supporting device (49) for supporting the support arms (12, 13), in particular in the pivoted-out use position (27), wherein the supporting device (49) has cooperating supporting means (50, 51, 52, 53) on the housing (8) and on the support arms (12, 13).

8. Load carrier according to one of the preceding claims, **characterized in that** the load carrier (1) has a carrier part (3, 3', 3") for receiving a load (28, 28', 28"), said carrier part being releasably connectable to the base part (2), wherein the carrier part (3, 3', 3") has a preferably bridge-like carrying part (4) and a load receiving means (5) .

9. Load carrier according to one of the preceding claims, **characterized in that** the carrying part (4) is configured to be connectable, in particular plug-fittable, to the pivoted-out support arms (12, 13), wherein the carrying part (4) transversely connects and supports the pivoted-out, in particular parallel, support arms (12, 13) and in each case has a support part (19) which is releasably connectable to a support arm (12, 13).

10. Load carrier according to one of the preceding claims, **characterized in that** the carrier part (3, 3', 3"), in particular the carrying part (4), has a releasable locking means (22) for fixedly connecting the carrier part (3, 3', 3") to the base part (2), in particular to the support arms (12, 13).

11. Load carrier according to one of the preceding claims, **characterized in that** the load carrier (1) has, on the housing (8), an energy supply (18), in particular a power supply, for its base part (2) and a connected carrier part (3, 3', 3").

12. Load carrier according to Claim 11, **characterized in that** the load carrier (1) has a preferably individual plug-fit connection (40) for transmitting energy and/or signals between the support arm (12, 13) and the carrier part (3, 3', 3") .

13. Load carrier according to Claim 12, **characterized in that** the preferably electrical plug-fit connection (40) has plug-fit parts (41, 42) which are releasably connectable to one another, wherein a plug-fit part (41) is arranged on the support arm (12, 13) and a plug-fit part (42) is arranged on the carrier part (3, 3', 3"), in particular on the support part (19), and wherein the plug-fit connection (40) is configured to be closed during the fastening of the carrier part (3, 3', 3") to the support arm (12, 13) by a preferably guided relative movement between the carrier part (3, 3', 3"), in particular the support part (19), and the support arm (12, 13).

14. Load carrier according to one of Claims 11 to 13, **characterized in that** the energy supply (18) of the load carrier (1) has a supply line (47) to a plug-socket holder (35') or a plug socket of a central trailer coupling (35) which is additionally arranged on the load carrier.

## Revendications

1. Support de charges pour un véhicule (25), en particulier un véhicule automobile, dans lequel le support de charges (1) présente plusieurs, en particulier deux, bras d'appui (12, 13) mobiles et latéralement espacés qui sont réalisés pour la fixation amovible d'une partie de support (3, 3', 3"), dans lequel le support de charges (1) présente une partie de base (2) à disposer de manière fixe sur le véhicule (25) et sur laquelle lesdits plusieurs bras d'appui (12, 13) sont disposés conjointement, dans lequel les plusieurs bras d'appui (12, 13) sont montés conjointement sur la partie de base (10) de manière réglable en hauteur, en particulier de manière coulissante en hauteur, et de manière à pouvoir pivoter respectivement autour de leur propre axe vertical (15), dans lequel la partie de base (2) présente un dispositif de levage et de pivotement (7) pour les bras d'appui (12, 13) ainsi qu'un carter (8) pouvant être fermé à l'intérieur duquel le dispositif de levage et de pivotement (7) et les bras d'appui (12, 13) sont logés.

2. Support de charges selon la revendication 1, **caractérisé en ce que** les bras d'appui (12, 13) présentent un alignement droit et sont orientés transversalement par rapport à l'axe vertical (15).

3. Support de charges selon l'une quelconque des revendications précédentes, **caractérisé en ce que** les bras d'appui (12, 13) sont mobiles entre une position de non-utilisation (26) et une position d'utilisation (27), dans lequel ils sont abaissés de la position de non-utilisation (26) et ensuite écartés vers la position d'utilisation (27), dans lequel les bras d'appui (12, 13) sont disposés de manière escamotée dans le carter (8) dans la position de non-utilisation (26) et font saillie hors du carter ouvert (8) dans la position d'utilisation (26).

4. Support de charges selon la revendication 3, **caractérisé en ce que** les bras d'appui (12, 13) de préférence coniques sont disposés dans la position d'utilisation (27) et dans la position de non-utilisation (26) dans le sens vertical à la même hauteur, et dans la position de non-utilisation pivotée se trouvent l'un après l'autre et le cas échéant côte à côte dans la direction axiale (34) du véhicule.

5. Support de charges selon l'une quelconque des revendications précédentes, **caractérisé en ce que** le dispositif de levage et de pivotement (7) présente un pont de levage (9) réglable en hauteur, guidé et motorisé, sur lequel les bras d'appui (12, 13) sont disposés conjointement et montés pivotants.

6. Support de charges selon l'une quelconque des revendications précédentes, **caractérisé en ce qu'**une partie de fond (8') du carter (8) est disposée sur le pont de levage (9) et accompagne le mouvement lors du réglage de la hauteur.

7. Support de charges selon l'une quelconque des revendications précédentes, **caractérisé en ce que** la partie de base (2) présente un dispositif de soutien (49) pour soutenir les bras d'appui (12, 13), en particulier dans la position d'utilisation écartée (27), dans lequel le dispositif de soutien (49) présente des moyens de soutien coopérants (50, 51, 52, 53) sur le carter (8) et sur les bras d'appui (12, 13).

8. Support de charges selon l'une quelconque des revendications précédentes, **caractérisé en ce que** le support de charges (1) présente une partie de support (3, 3', 3") pouvant être reliée de manière amovible à la partie de base (2) pour recevoir une charge ou un chargement (28, 28', 28"), dans lequel la partie de support (3, 3', 3") présente une partie porteuse (4) de préférence en forme de pont et un moyen de réception de charges (5).

9. Support de charges selon l'une quelconque des revendications précédentes, **caractérisé en ce que** la partie porteuse (4) est réalisée de manière à pouvoir être reliée aux bras d'appui (12, 13) écartés, en particulier de manière à pouvoir être enfichée dans ceux-ci, dans lequel la partie porteuse (4) relie transversalement et soutient les bras d'appui (12, 13) écartés, en particulier parallèles, et présente respectivement une partie d'appui (19) pouvant être reliée de manière amovible à un bras d'appui (12, 13).

10. Support de charges selon l'une quelconque des revendications précédentes, **caractérisé en ce que** la partie de support (3, 3', 3"), en particulier la partie porteuse (4), présente un verrouillage amovible (22) pour le raccordement fixant de la partie de support (3, 3', 3") à la partie de base (2), en particulier aux bras d'appui (12, 13).

11. Support de charges selon l'une quelconque des revendications précédentes, **caractérisé en ce que** le support de charges (1) présente sur le carter (8) une alimentation en énergie (18), en particulier une alimentation électrique, pour sa partie de base (2) ainsi que pour une partie de support reliée (3, 3', 3") .

12. Support de charges selon la revendication 11, **caractérisé en ce que** le support de charges (1) présente une connexion enfichable (40), de préférence unique, pour transmettre de l'énergie et/ou des signaux entre le bras d'appui (12, 13) et la partie de support (3, 3', 3").

13. Support de charges selon la revendication 12, **caractérisé en ce que** la connexion enfichable (40), de préférence électrique, présente des éléments de connexion (41, 42) pouvant être reliés de manière amovible l'un à l'autre, dans lequel un élément de connexion (41) est disposé sur le bras d'appui (12, 13) et un élément de connexion (42) est disposé sur la partie de support (3, 3', 3"), en particulier sur la partie d'appui (19), et dans lequel la connexion enfichable (40) est réalisée pour être fermée lorsque la partie de support (3, 3', 3") est fixée au bras d'appui (12, 13) par un mouvement relatif, de préférence guidé, entre la partie de support (3, 3', 3"), en particulier la partie d'appui (19), et le bras d'appui (12, 13).

14. Support de charges selon l'une quelconque des revendications 11 à 13, **caractérisé en ce que** l'alimentation en énergie (18) du support de charges (1) présente un câble d'alimentation (47) jusqu'à un support de prise (35') ou à une prise d'un accouplement de remorque central (35) disposé en plus sur le support de charges.
